(19) Europäisches Patentamt
European Patent Office
Office européen des brevets

(11) EP 1 566 251 A1

(12) EUROPEAN PATENT APPLICATION
published in accordance with Art. 158(3) EPC

(43) Date of publication:
**24.08.2005 Bulletin 2005/34**

(21) Application number: **03758839.9**

(22) Date of filing: **23.10.2003**

(51) Int Cl.[7]: **B29C 41/24**, C08J 5/18, C08J 9/26, B29C 39/18, H01B 1/06, H01M 8/02

(86) International application number:
**PCT/JP2003/013577**

(87) International publication number:
**WO 2004/037508 (06.05.2004 Gazette 2004/19)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **24.10.2002 JP 2002309970**

(71) Applicant: **Toyo Boseki Kabushiki Kaisha
Osaka 530-8230 (JP)**

(72) Inventors:
- **OKAMOTO, K., c/o Toyo Boseki Kabushiki Kaisha, Ohtsu-shi, Shida 520-0292 (JP)**
- **KOBAYASHI, H., c/o Toyo Boseki Kabushiki Kaisha, Ohtsu-shi, Shiga 520-0292 (JP)**
- **KAWAHARA, Keizou, c/o Toyo Boseki Kabushiki Kaisha Ohtsu-shi, Shiga 520-0292 (JP)**
- **HAMAMOTO, Shiro, c/o Toyo Boseki Kabushiki Kaisha Ohtsu-shi, Shiga 520-0292 (JP)**
- **TAKASE, Satoshi, c/o Toyo Boseki Kabushiki Kaisha Ohtsu-shi, Shiga 520-0292 (JP)**
- **SAKAGUCHI, Y., c/o Toyo Boseki Kabushiki Kaisha Ohtsu-shi, Shiga 520-0292 (JP)**
- **INUKAI, Cyuji, c/o Toyo Boseki Kabushiki Kaisha Ohtsu-shi, Shiga 520-0292 (JP)**
- **YAMADA, Jun, c/o Toyo Boseki Kabushiki Kaisha Ohtsu-shi, Shiga 520-0292 (JP)**
- **SAKURA, Daisuke, c/o Toyo Boseki Kabushiki Kaisha Ohtsu-shi, Shiga 520-0292 (JP)**
- **NAKAMURA, M., c/o Toyo Boseki Kabushiki Kaisha Ohtsu-shi, shiga 520-0292 (JP)**

(74) Representative: **Vossius & Partner
Siebertstrasse 4
81675 München (DE)**

# (54) HEAT-RESISTANT FILM AND COMPOSITE ION-EXCHANGE MEMBRANE

(57) The present invention is a heat-resistant film comprising at least any one of a polybenzazole, aramid and polyamideimide produced by introducing a thin film made by a roll, slit or press from a polymer solution sandwiched between at least two supports into a coagulating bath and peeling the supports off in the coagulating bath to effect the coagulation, and a composite ion-exchange membrane having a surface layer consisting of an ion-exchange resin excluding a porous film on the both side of a composite layer formed by impregnating said film with the ion-exchange resin. A heat-resistant film having a combination of excellent heat resistance, mechanical strength, smoothness and interlaminar peeling resistance, especially a microporous heat-resistant film, and a composite ion-exchange membrane employing the same which has an excellent ion conductivity are provided.

EP 1 566 251 A1

FIG.1

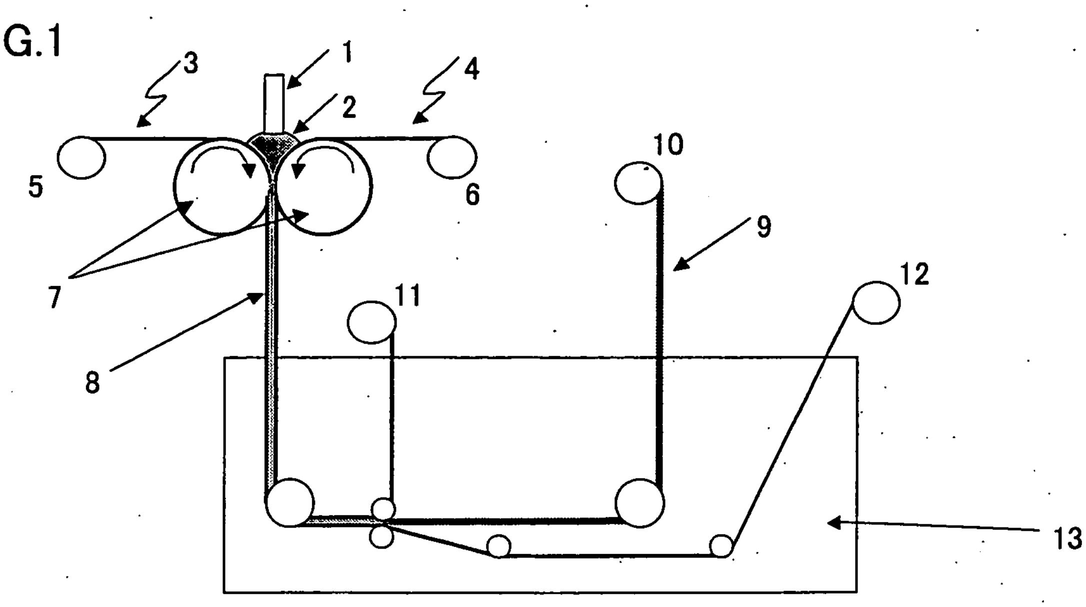

## Description

Technical Field

The present invention relates to a film made from a heat-resistant polymer such as polybenzazole, which has a combination of excellent heat resistance, mechanical strength, smoothness and interlaminar peeling resistance, especially a microporous film. The present invention also relates to a composite ion-exchange membrane whose mechanical strength and ion conductivity are excellent, especially a polymeric solid electrolyte membrane.

Background Art

Recently, a rapid advancement in IT field poses also to a non-porous or porous film employed as a part of its related electronic instrument or cells a severe commercial requirement with regard to heat resistance, chemical resistance, size stability, thickness accuracy, uniformity and price in response to the requirement for a higher performance or a smaller size of such an instrument or cell.

For example, a super engineering plastic such as polybenzazole, polyimide, aramid and the like is excellent in terms of heat resistance, chemical resistance, irradiation resistance and the like, and is a very attractive film material capable or fulfilling the commercial requirement described above. However, such a super engineering plastic has an extremely high melting point and a decomposition temperature which is extremely close to the melting point which make it difficult to use a so called fusion film-forming technology, and a solution film-forming technology is employed generally.

Such a solution film-forming technology is a film forming method in which a solution of a resin in a solvent is extruded via a die as a thin film which is applied on an endless belt and dried or coagulated and then peeled off as disclosed in many patent publications such as JP-A-2001-151902, JP-A-2002-283369, JP 3183297, JP-A-2001-151910, JP 3196684 and the like. As a method for improving a disadvantageous nature of the application onto an endless belt described above which is a film surface defect resulting from the pinhole formation due to an erosion or damage of a metal belt attributable to repetitive drying and/or coagulation and peeling, a method for producing a film consisting of a heat-resistant resin by applying a resin solution onto a biaxially oriented polyester film followed by a drying step followed by peeling the coating film from the polyester film is disclosed in JP-A-2000-233439.

However, any of the production methods described above involves a problem resulting from the use of a die for forming a thin film which is experienced as a difficulty in applying a film-forming solution whose viscosity is departing from an appropriate range as well as a limited accuracy of the thickness of the resulting film. Moreover, drying and coagulating behaviors are different between the supported side of the thin film and the opposite side since only one side of the thin film subjected to the steps of drying and/or coagulation is supported by a belt or polyester film, resulting in a problematic difference in the characteristics or the structure between the both sides of a resultant film. Furthermore, the need of expensive devices such as dies and extruders is disadvantageous from an economical point of view. In addition, such a use of the dies and extruders requires a large amount of a solution or solvent for replacing a resin solution or for washing the devices, which is also disadvantageous from an economical point of view, and also poses a problematic inconvenience in switching the items required for responding a diversity of commercial needs, thus raising a strong desire to develop a production method capable of solving such a problem.

On the other hand, a solution of a rigid polymer at a high concentration tends to form a liquid crystal phase showing an optical anisotropy. Since such a rigid polymer solution tends to undergo an orientation of molecular chains in the direction of flowing, it takes a long time until the direction of the molecular chain, once aligned, becomes random. Accordingly, the film forming method described above gives a substantial difference in the dynamic characteristics between the direction in which the polymer solution is extruded and extended and the direction vertical thereto, which should be improved. Nevertheless, as described in Chapter 3 in Application of High Temperature Polymers, ed. by Robert R. Luise, CRC Press, 1997, the molecules are aligned in an extruding direction and a draw-down direction, and thus give a problematic film which is readily torn apart when being pulled in the lateral direction. Accordingly, USP 2898924 employed a technology for producing a thin film by means of a biaxial orientation using a blow molding method, and USP 4939235 attempted to improve the anisotropy of the dynamic characteristics by means of an orientation in different directions between the both sides of a film.

However, any of these rigid polymers allows, when subjected to a biaxial orientation or an orientation to different directions between the both sides of a film, a molecular chain to readily undergo a so-called intra-plane orientation, resulting in a problematic tendency to undergo interlaminar peeling or brittle destruction in the direction of the film thickness.

While any of the methods described above focused on the characteristics of the sheer viscosity upon processing which is reduced relatively at a high concentration which allows a solution of a rigid polymer to exhibit an optical anisotropy, i.e., liquid crystal property, a film formation using a solution exhibiting an optical anisotropy involves a

difficulty in balancing the mechanical properties between the longitudinal direction of the film (MD, direction of film running, machine direction) and the widthwise direction (TD, direction vertical to MD, transverse direction), and also poses a problem of the interlaminar peeling in the direction of the film thickness as described above. As a method for solving a problem with regard to the balance of the dynamic characteristics, a method for forming a film by conducting a die extrusion and previous steps in an optically anisotropic phase and then effecting a phase transition to an optically isotropic phase after the die extrusion step by means of composition change or temperature change is disclosed in JP-A-9-118758. In addition, JP-A-2000-273214 discloses a method equivalent to the method disclosed in JP-A-9-118758, i.e., a method for producing a polybenzazole film exhibiting a high elasticity and an appropriate extension which is obtained by rolling a polybenzazole solution showing an optical anisotropy onto a support followed by changing into an optically isotropic condition.

However, in any of the methods described above, a film formed from a liquid crystalline anisotropic solution undergoes the formation of an orientation spot due to the polydomain structure of the liquid crystal phase and tends to be heterogeneous, and still involves a problematically interlaminar peeling in the direction of the film thickness. Also the problems of the unbalance of the mechanical properties between the longitudinal and widthwise directions are not solved satisfactorily.

In order to overcome such a disadvantage, a processing from a solution at a low concentration is required, and a method for forming a film from a solution at a low concentration by means of a spin coating method was attempted. For example, L. A. Cintavey et al describes in Journal of Applied Polymer Science, Vol.76, pp1448-1456 (2000) a polybenzazole thin film formed on a silicon wafer using a 0.5% solution of a polyphenylene benzobisthiazole in methanesulfonic acid, whose optical characteristics are also discussed. However, this method poses a difficulty in obtaining a large amount of films at once by this method, and thus is not preferable from an industrial point or view. The film forming method using a die described above also involves a problem which is a difficulty in utilizing a processing from a solution at a low concentration a film forming solution because of a too low viscosity, which problem should also be solved.

An aramid film also involves the problems similar to those associated with a polybenzaole film, and is actually industrialized by an extremely complicated process.

A polyamideimide film is also studied in JP-A-7-41559, JP-A-10-226028, JP-A-11-216344, JP-A-2001-151902, JP-A-2002-283369, JP 3183297, JP-A-2001-151910, JP 3196684, JP-A-2000-23339, but a polyamideimide film having excellent thickness accuracy and uniformity has not been obtained at an acceptable cost.

On the other hand, a novel electricity generation technology is focused on recently which is excellent in terms of energy efficiency and environmental protection. Especially, a solid polymer fuel cell employing a polymeric solid electrolyte membrane is subjected extensively to the development of an electric power supply device in an automobile or disperse electricity generation because of its properties such as a high energy density and a lower operation temperature when compared with other modes of the fuel cells which allow the start-up and shut-off to be accomplished readily. Similarly, a direct methanolic fuel cell employing a polymeric solid electrolyte membrane and a direct supply of methanol as a fuel is also developed extensively for the applications to power supplies for portable devices. The polymeric solid electrolyte membrane usually employs a proton-conductive ion-exchange resin. In addition to the proton conductivity, other properties such as a fuel permeation preventing ability for preventing the permeation of a fuel such as hydrogen and a mechanical strength should be possessed by the polymeric solid electrolyte membrane. A known polymeric solid electrolyte membrane may for example be a perfluorocarbonsulfonic acid polymer membrane incorporating a sulfonate group such as "Nafion®" (trade name) manufactured by DuPont in the United States of America.

For the purpose of achieving a high output or high efficient of a solid polymeric fuel cell, a reduction in the ion conductivity resistance of the solid polymeric fuel cell is effective, and can be accomplished for example by reducing the film thickness. Even in the case of a polymeric sold electrolyte membrane such as Nafion®, the film thickness is attempted to be reduced. However, the reduction in the film thickness leads to a reduction in the mechanical strength, which may allow the membrane to be readily broken upon adhesion of the polymeric solid electrolyte membrane and an electrode by a hot press, or may result in a problematic deterioration of the electricity generation characteristics due to the peeling of the electrode, once being adhered to the polymeric solid electrolyte membrane, due to the change in the membrane size. Furthermore, the reduction in the film thickness reduces the fuel permeation preventing ability, resulting in a problematic reduction in the power generation ability or in the fuel utilization efficiency.

Uses of a polymeric solid electrolyte membrane in addition to the use as an ion-exchange membrane for a fuel cell described above may for example be a use in an electrochemical field including an electrolysis such as an alkaline electrolysis or production of hydrogen from water as well as an electrolyte in various cells such as a lithium cell or a nickel hydrogen cell, a use in a mechanically functional material such as a micro actuator or artificial muscle, as well as other wide range of the use including an ion or molecule recognizing/responding functional material, separating/purifying functional material and the like, and thus is expected in each use to be capable of providing an excellent function which has not been achieved so far by means of enabling a higher strength and a thinner thickness of the polymeric solid electrolyte membrane.

As a means for improving the mechanical strength of a polymeric solid electrolyte membrane while suppressing the change in the size, a composite polymeric solid electrolyte membrane is proposed which combines a polymeric solid electrolyte membrane with various reinforcing materials. JP-A-8-162132 describes a composite polymeric solid electrolyte membrane in which an oriented porous polytetrafluoroethylene film are impregnated and integrated with an ion-exchange resin perfluorocarbonsulfonic acid polymer being filled in its voids. However, since in such a composite polymeric solid electrolyte membrane the reinforcing material is made from a polytetrafluoroethylene, the reinforcing material is softened by heat upon generating electricity to undergo a change in the size via a creep, and also since the capacity of the voids in the reinforcing material undergoes almost no change upon drying after impregnating the reinforcing material with a solution of a perfluorocarbonsulfonic acid polymer, the perfluorocarbonsulfonic acid polymer precipitating inside of the voids of the reinforcing material tends to be localized, and for the purpose of filling the voids completely with the polymer a complicated process such as impregnation with an ion-exchange resin solution followed by drying which should be repeated several time, and also since the voids tend to remain as they are it is difficult to obtain a film having an excellent fuel permeation preventing ability. JP-A-2001-35508 describes a composite polymeric solid electrolyte membrane in which a fibrillated polytetrafluoroethylene is dispersed as a reinforcing material in a film of a perfluorocarbonsulfonic acid polymer. However, such a composite polymeric solid electrolyte membrane does not have a sufficient mechanical strength due to the non-continuous structure of the reinforcing material and undergoes a problematic peeling of an electrode due to an inability of suppressing the deformation of the membrane.

A polybenzazole such as a polybenzoxazole (PBO) or polybenzimidazol (PBI) (hereinafter simply referred to as polybenzazole) is excellent in terms of a high heat resistance, a high strength and a high elasticity, and accordingly expected to be suitable as a reinforcing material for a polymeric solid electrolyte membrane.

JP-A-2000-273214 discloses a method in which a film of a solution of a polybenzazole which is optically anisotropic is formed and then made isotropic by moisture absorption followed by coagulation whereby obtaining a polybenzazole film, but a polybenzazole film obtained by the described method is a transparent and highly dense film, which is not suitable for the purpose of impregnating it with an ion-exchange resin to give an ion-exchange membrane.

In a molding process of a polybenzazole, a film formation by a rolling method using an applicator is well known. However, when using a polybenzazole solution whose polymer concentration is 1% by weight or higher, the polybenzazole solution becomes highly viscose, resulting in a formation of streaks in the direction of a squeegee, which leads to a difficulty in obtaining a smooth film. The polymer concentration which can practically be employed is 0.5% by weight at maximum. Accordingly, a poor economical performance and insufficient strength and elasticity of the resultant film are experienced unfortunately. A film made from a polybenzazole by a rolling method has a surface structure on the side in contact with a support which is different from the surface structure on the side not in contact with a support, whereby presenting an asymmetric structure. While the surface in contact with the support exhibits a dense structure, the surface not in contact with the support exhibits a porous structure. When such a asymmetrically structured polybenzazole support film is impregnated with an ion-exchange resin, a sufficient impregnation with the ion-exchange resin is not achieved at the region where the dense structure is formed, resulting in a problematically insufficient electricity generating ability of a resultant ion-exchange membrane.

Brief Description of the Drawings

Fig. 1: a schematic view of a production method of the present invention.
Fig. 2: a schematic view of a interlaminar peeling test.
Fig. 3: a schematic view of a sectional structure of a composite ion-exchange membrane.

In Figures, 1 is a resin solution supply pipe, 2 is a resin solution, 3 is a support 1, 4 is a support 2, 5 is a support 1 unwinding roll, 6 is a support 2 supplying role, 7 is a counter roll, 8 is a laminated body consisting of support/resin solution/support, 9 is a wet resin film, 10 is a wet resin film winding roll, 11 is a support 2 winding roll, 12 is a support 1 winding roll, 13 is a coagulation bath, 14 is a test film, 15 is an adhesive tape, 16 is a surface layer A, 17 is a composite layer and 18 is a surface layer B.

Disclosure of the Invention

The present invention solves the problems associated with a prior art described above and provides a film made from a heat-resistant polymer such as polybenzazole, which has a combination of excellent heat resistance, mechanical strength, smoothness and interlaminar peeling resistance, especially a microporous film. The present invention also provides a composite ion-exchange membrane whose mechanical strength and ion conductivity are excellent, especially a polymeric solid electrolyte membrane.

The present invention is characterized in that it is produced by introducing a thin film made by a roll, slit or press from a polymer solution sandwiched between at least two supports into a coagulating bath and peeling the supports off in the coagulating bath to effect the coagulation. An inventive composite ion-exchange membrane is characterized by the formation of a composite layer by impregnating a porous film made from a polybenzazole described above with the ion-exchange resin and a surface layer consisting of an ion-exchange resin having no micropores formed on the both side of said composite layer as sandwiching said composite layer.

Thus, the present invention is: (1) a heat-resistant film comprising at least any one of a polybenzazole, aramid and polyamideimide produced by sandwiching a polymer solution between at least two supports, introducing a laminate, obtained by converting the polymer solution into a thin film by a roll, slit or press, into a coagulating bath and peeling at least one side of the supports off in the coagulating bath whereby effecting the coagulation of a polymer solution in the form of the thin film;

(2) a heat-resistant film according to the above-mentioned (1) wherein the polymer solution is an isotropic solution;
(3) a heat-resistant film according to the above-mentioned (1) or (2) wherein the coagulation bath is a poor solvent for the polymer, or a mixture of a poor solvent and a good solvent, or a solution containing salts in a poor solvent;
(4) a heat-resistant film according to any of the above-mentioned 1 to 3 wherein the support is a film allowing the poor solvent for the polymer in the coagulation bath or a vapor thereof to permeate and wherein the poor solvent or a vapor thereof which has permeate said film is used for effecting at least a part of the coagulation of the polymer solution; and
(5) a composite ion-exchange membrane comprising a composite layer formed by impregnating a heat-resistant film according to any of the above-mentioned (1) to (4) with the ion-exchange resin and a surface layer consisting of an ion-exchange resin having no micropores formed on the both side of said composite layer as sandwiching the composite layer.

A heat-resistant film and a composite ion-exchange membrane according to the present invention are detailed below.

A polymer constituting an inventive heat-resistant film is a polymer which is dissolved in a solvent and which has a film-forming ability, and is a polymer consisting of at least one of a polybenzazole, aramid and polyamideimide whose polymer melting points are extremely high and whose decomposition temperatures are extremely close to the melting points, i.e. one classified as a so-called super engineering plastic.

A polybenzazole employed in the present invention is a polymer having a structure containing in its polymer chain an oxazole ring, thiazole ring or imidazole ring, and means one containing in its polymer chain a repeating unit represented by Formulae (1-1, -2) shown below.

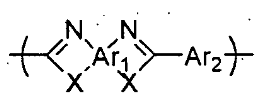

(Chemical Formula 1-1)

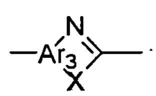

(Chemical Formula 1-2)

In Formulae, each of $Ar_1$, $Ar_2$ and $Ar_3$ denotes an aromatic unit optionally substituted with various aliphatic groups, aromatic groups, halogen group, hydroxyl group, nitro group, cyano group, trifluoromethyl group and the like. Such an aromatic unit may be a monocyclic unit such as a benzene ring, a fused cyclic unit such as naphthalene, anthracene and pyrene, or a polycyclic aromatic unit of two or more such aromatic units taken together via any bonds. The positions ofN and X in an aromatic unit are not limited particularly as far as they allow a benzazole ring to be formed. Furthermore, it may be a heterocyclic aromatic unit having N, O or S in the aromatic ring; in addition to a hydrocarbon-based aromatic unit. X denotes O, S or NH.

$Ar_1$ described above is preferably represented by Formulae (2-1, -2) shown below.

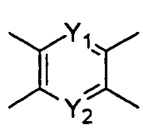

(Chemical Formula 2-1)

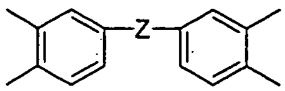

(Chemical Formula 2-2)

In Formulae, each of $Y_1$ and $Y_2$ denotes CH or N, Z is a direct bond, -O-, -S-, $-SO_2-$, $-C(CH_3)_2-$, $-C(CF_3)_2-$ and -CO-.

$Ar_2$ is preferably represented by Formulae (3-1, -22) shown below.

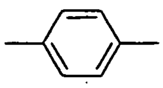

Chemical Formula 3-1

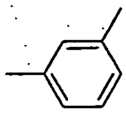

Chemical Formula 3-2

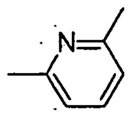

Chemical Formula 3-3

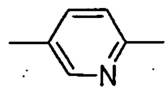

Chemical Formula 3-4

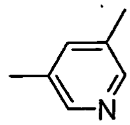

Chemical Formula 3-5

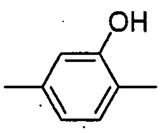

Chemical Formula 3-6

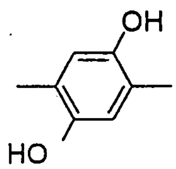

Chemical Formula 3-7

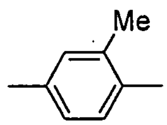

Chemical Formula 3-8

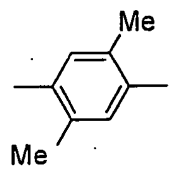

Chemical Formula 3-9

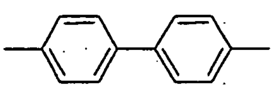

Chemical Formula 3-10

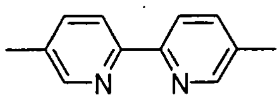

Chemical Formula 3-11

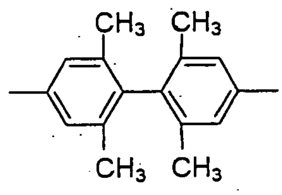

Chemical Formula 3-12

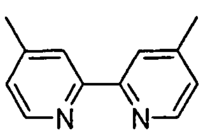

Chemical Formula 3-13

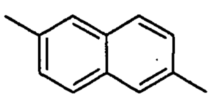

Chemical Formula 3-14

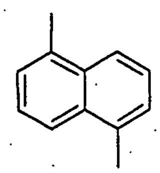

Chemical Formula 3-15

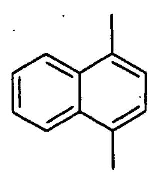

Chemical Formula 3-16

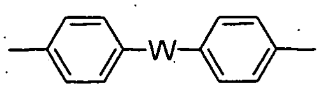

Chemical Formula 3-17

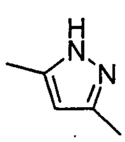

Chemical Formula 3-18

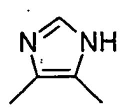

Chemical Formula 3-19

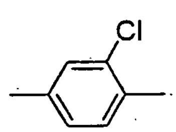

Chemical Formula 3-20

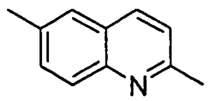

Chemical Formula 3-21

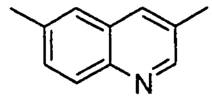

Chemical Formula 3-22

In Formulae, W denotes -O-, -S-, $-SO_2-$, $-C(CH_3)_2-$, $-C(CF_3)_2-$ and -CO-.

$Ar_3$ is preferably represented by Formula (4) shown below.

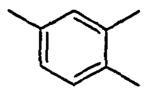

(Chemical Formula 4)

While such a polybenzazole may be a homopolymer having a repeating unit described above, it may be a random, alternating or block copolymer having a combination of the structure units listed above, such as those described in USP 4703103, USP 4533692, USP 4533724, USP 4533693, USP 4539567, USP 4578432 and the like.

Typically, such a polybenzazole structure unit may be those represented by Formulae (5-1 to -8, 6-1 to -8, 7-1 to -12, 8-1 to -8, 9-1 to -8, 10-1 to -12, 11-1 to -11).

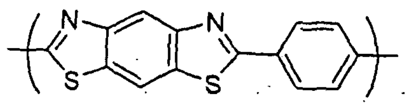

Chemical Formula 5-1

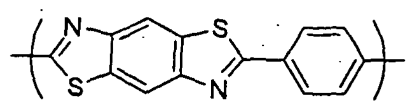

Chemical Formula 5-2

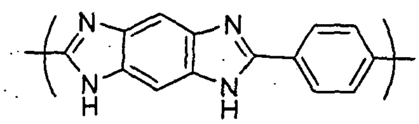

Chemical Formula 5-3

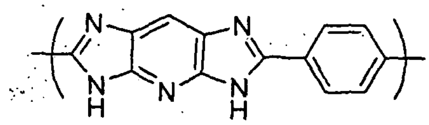

Chemical Formula 5-4

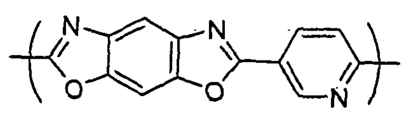

Chemical Formula 5-5

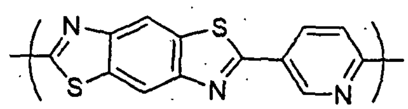

Chemical Formula 5-6

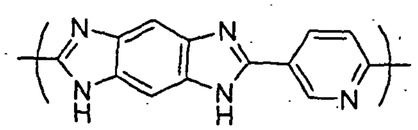

Chemical Formula 5-7

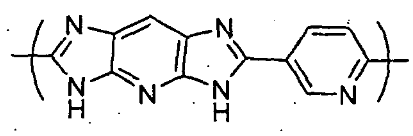

Chemical Formula 5-8

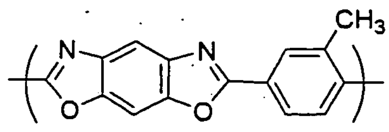

Chemical Formula 6-1

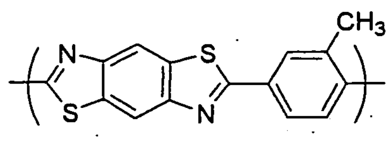

Chemical Formula 6-2

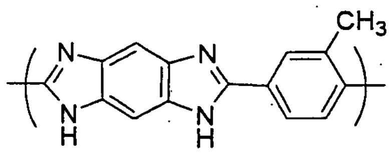

Chemical Formula 6-3

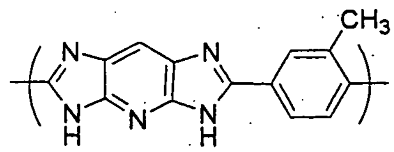

Chemical Formula 6-4

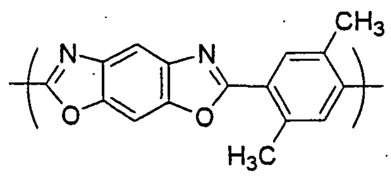

Chemical Formula 6-5

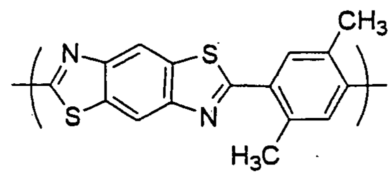

Chemical Formula 6-6

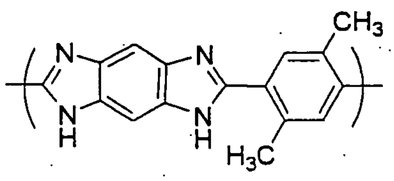

Chemical Formula 6-7

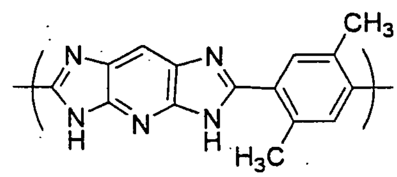

Chemical Formula 6-8

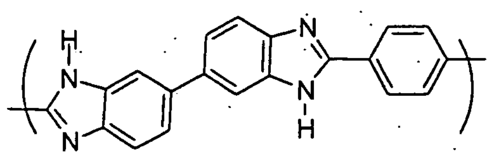

Chemical Formula 7-1

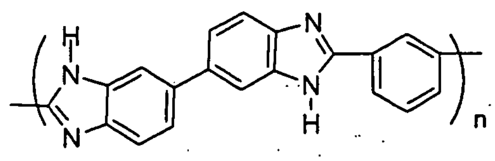

Chemical Formula 7-2

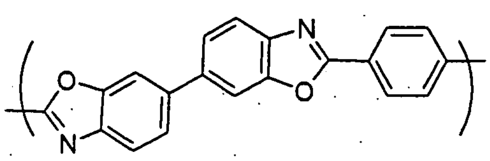

Chemical Formula 7-3

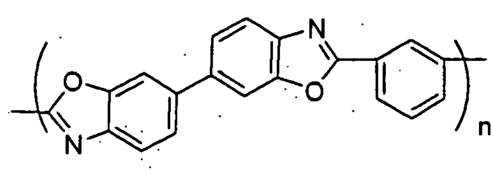

Chemical Formula 7-4

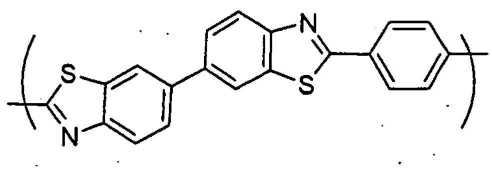

Chemical Formula 7-5

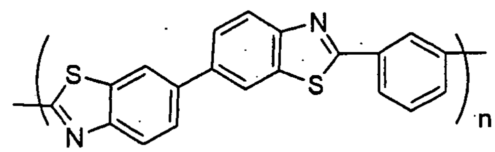

Chemical Formula 7-6

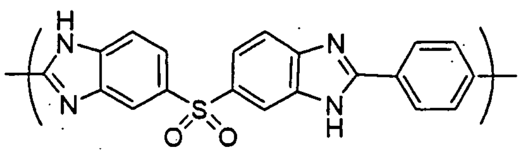

Chemical Formula 7-7

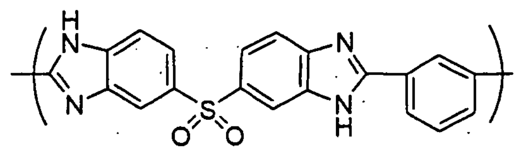

Chemical Formula 7-8

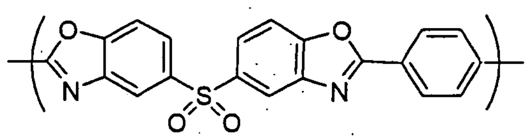

Chemical Formula 7-9

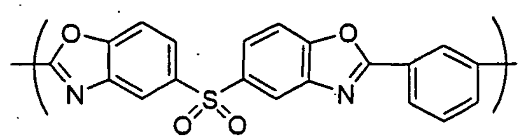

Chemical Formula 7-10

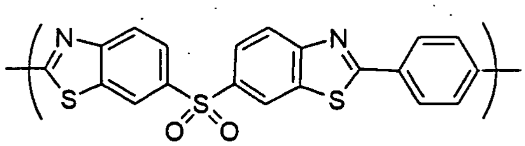

Chemical Formula 7-11

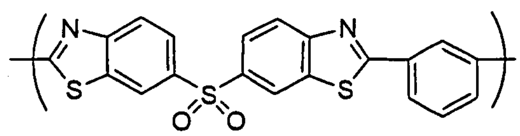

Chemical Formula 7-12

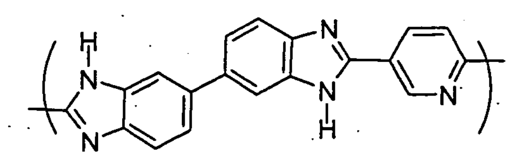

Chemical Formula 8-1

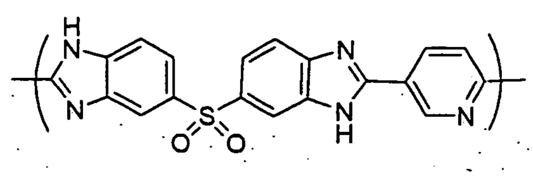

Chemical Formula 8-2

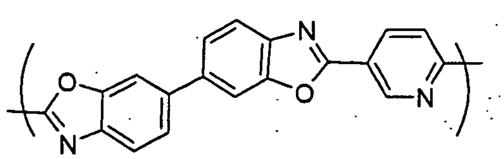

Chemical Formula 8-3

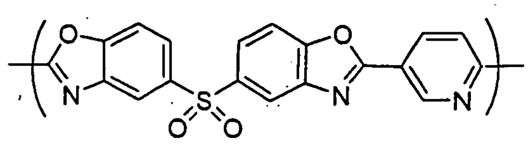

Chemical Formula 8-4

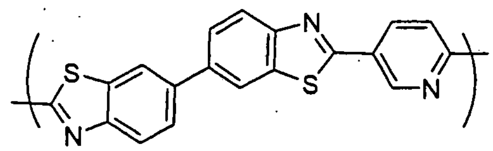

Chemical Formula 8-5

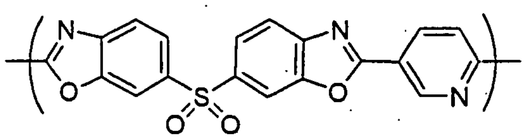

Chemical Formula 8-6

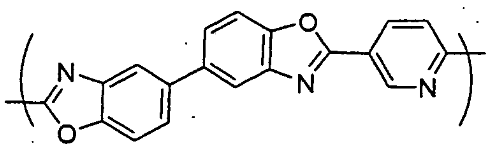

Chemical Formula 8-7

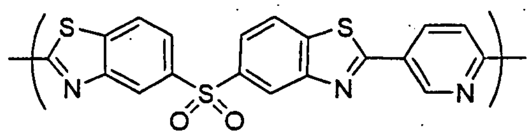

Chemical Formula 8-8

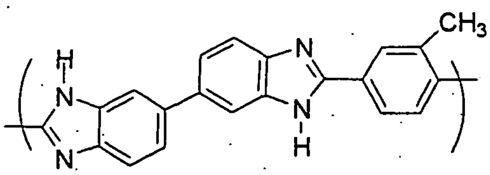

Chemical Formula 9-1

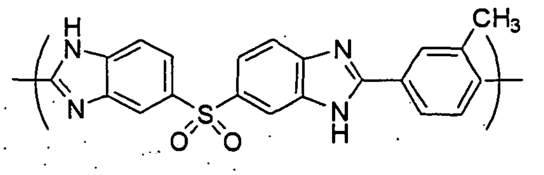

Chemical Formula 9-2

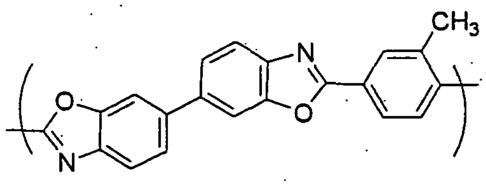

Chemical Formula 9-3

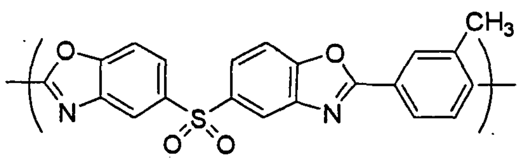

Chemical Formula 9-4

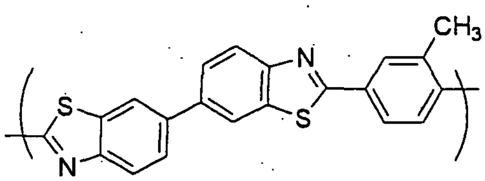

Chemical Formula 9-5

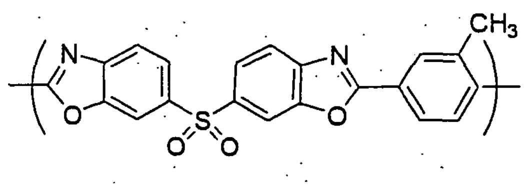

Chemical Formula 9-6

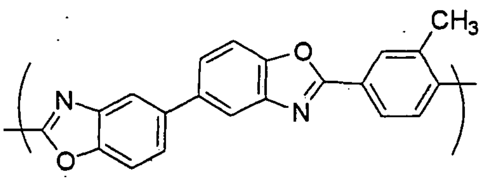

Chemical Formula 9-7

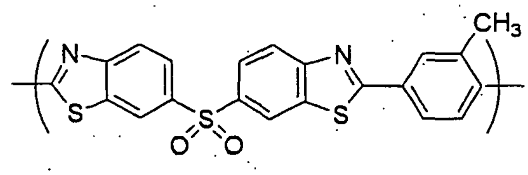

Chemical Formula 9-8

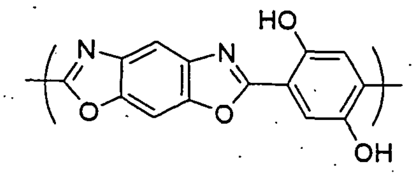

Chemical Formula 10-1

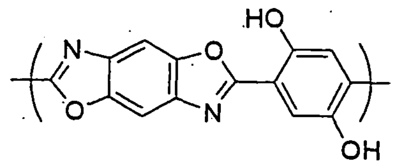

Chemical Formula 10-2

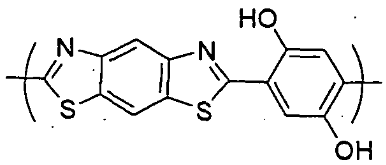

Chemical Formula 10-3

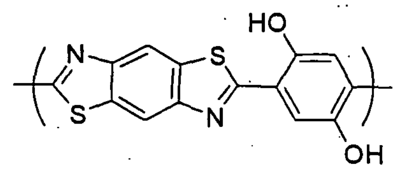

Chemical Formula 10-4

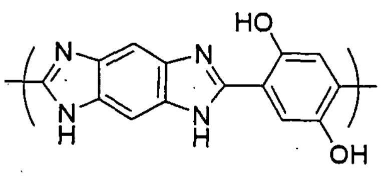

Chemical Formula 10-5

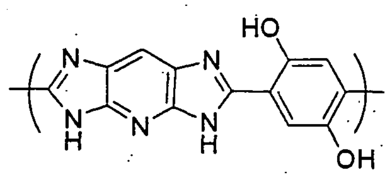

Chemical Formula 10-6

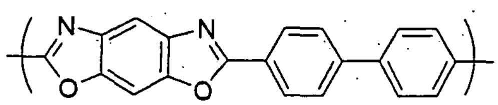

Chemical Formula 10-7

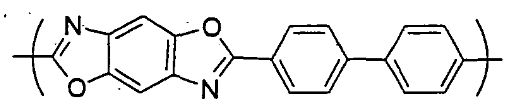

Chemical Formula 10-8

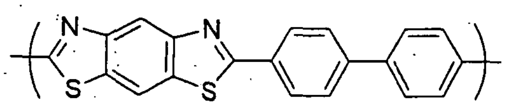

Chemical Formula 10-9

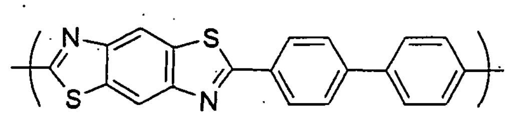

Chemical Formula 10-10

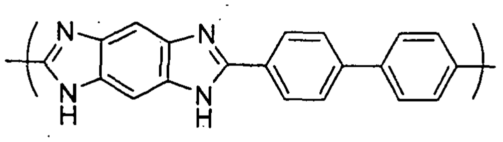

Chemical Formula 10-11

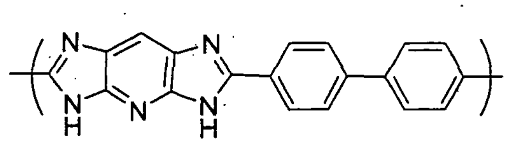

Chemical Formula 10-12

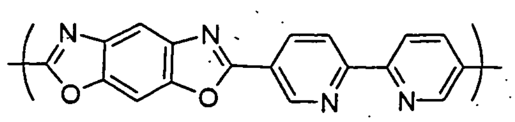

Chemical Formula 11-1

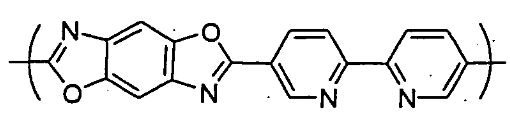

Chemical Formula 11-2

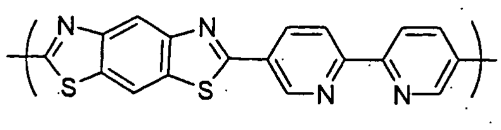

Chemical Formula 11-3

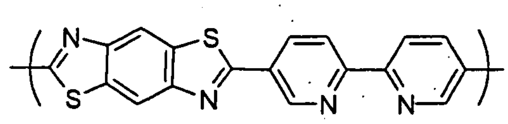

Chemical Formula 11-4

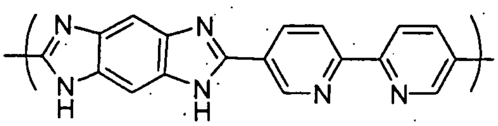

Chemical Formula 11-5

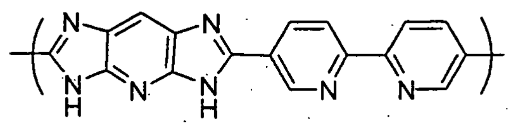

Chemical Formula 11-6

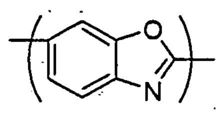

Chemical Formula 11-7

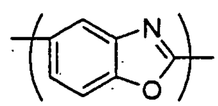

Chemical Formula 11-8

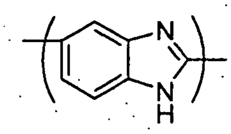

Chemical Formula 11-9

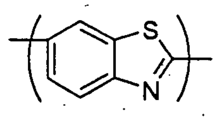

Chemical Formula 11-10

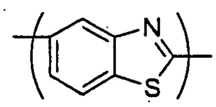

Chemical Formula 11-11

In addition to only these polybenzazole structure units, other polymer structure units may be employed to form a random or block copolymer. In such a case, other polymer structure units are selected preferably from highly heat-resistant aromatic structure units. Typically, a polyimide structure unit, polyamide structure unit, polyamideimide structure unit, polyoxydiazole structure unit, polyazomethine structure unit, polybenzazoleimide structure unit, polyether ketone structure unit and polyethersulfone structure unit may be exemplified.

A polyimide structure unit may for example be one represented by Formula (12) shown below.

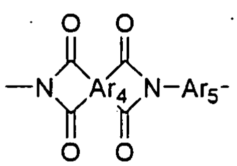

(Chemical Formula 12)

In Formula, $Ar_4$ is represented by a tetravalent aromatic unit, which is preferably one represented by Formulae (13-1 to -8) shown below.

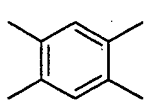

Chemical Formula 13-1

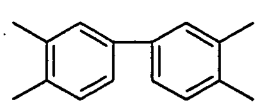

Chemical Formula 13-2

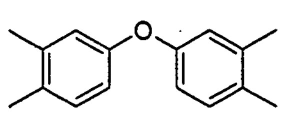

Chemical Formula 13-3

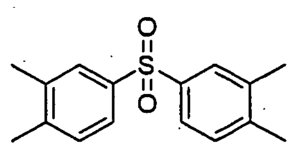

Chemical Formula 13-4

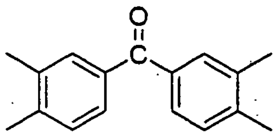

Chemical Formula 13-5

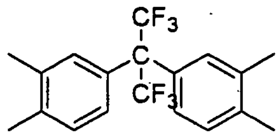

Chemical Formula 13-6

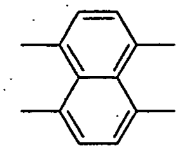

Chemical Formula 13-7

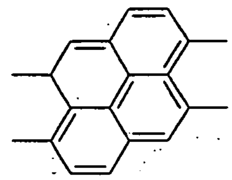

Chemical Formula 13-8

$Ar_3$ is a divalent aromatic unit, which is preferably one represented by Formulae (14-1 to -8) shown below. On an aromatic ring shown here, various substituents may be present such as a methyl group, methoxy group, halogen group, trifluoromethyl group, hydroxyl group, nitro group, cyano group and the like.

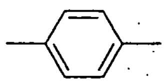

Chemical Formula 14-1

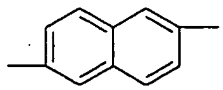

Chemical Formula 14-2

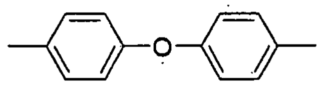

Chemical Formula 14-3

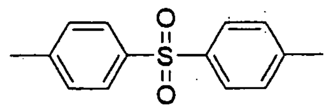

Chemical Formula 14-4

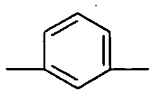

Chemical Formula 14-5

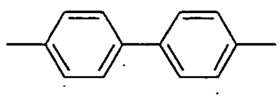

Chemical Formula 14-6

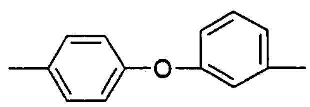

Chemical Formula 14-7

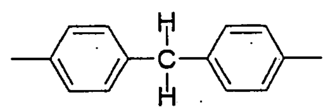

Chemical Formula 14-8

Typically, such a polyimide structure unit may be one represented by Formulae (15-1 to 8, 16-1 to -5) shown below.

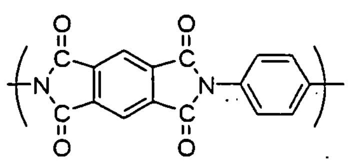

Chemical Formula 15-1

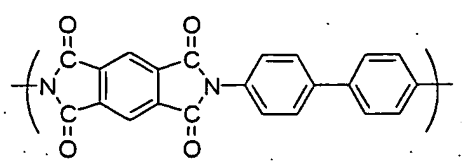

Chemical Formula 15-2

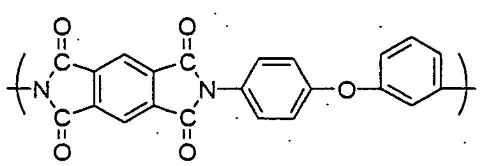

Chemical Formula 15-3

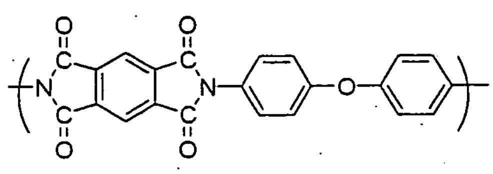

Chemical Formula 15-4

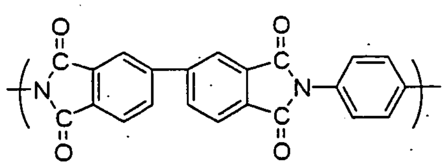

Chemical Formula 15-5

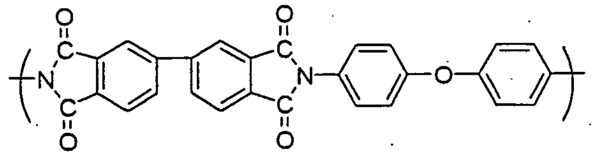

Chemical Formula 15-6

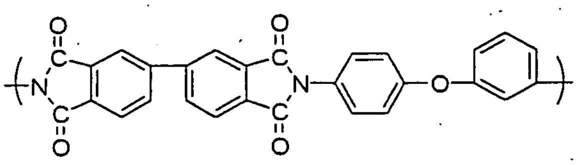

Chemical Formula 15-7

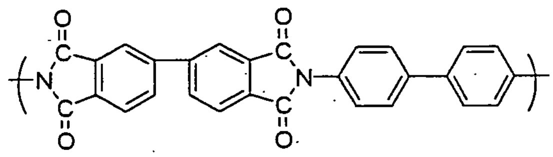

Chemical Formula 15-8

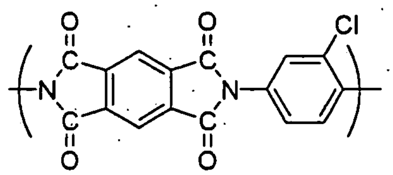

Chemical Formula 16-1

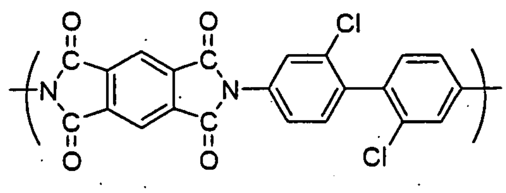

Chemical Formula 16-2

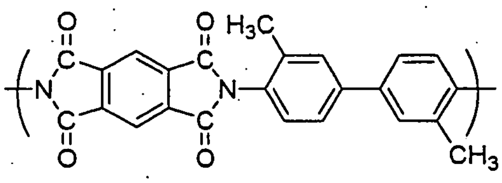

Chemical Formula 16-3

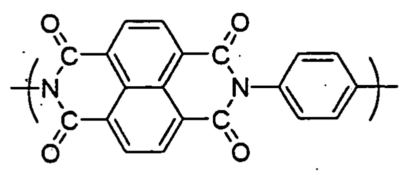

Chemical Formula 16-4

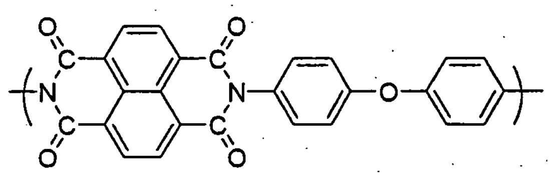

Chemical Formula 16-5

A polyamide structure unit may for example be one represented by Formulae (17-1,-2) shown below.

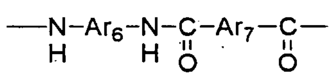

(Chemical Formula 17-1)

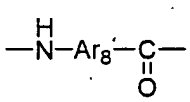

(Chemical Formula 17-2)

In Formulae, $Ar_6$, $Ar_7$ and $Ar_8$, independently of one another, are selected preferably from Formulae (18-1 to -6) shown below. On an aromatic ring shown here, various substituents may be present such as a methyl group, methoxy group, halogen group, trifluoromethyl group, hydroxyl group, nitro group, cyano group and the like.

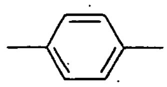
Chemical Formula 18-1

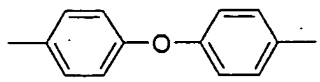
Chemical Formula 18-2

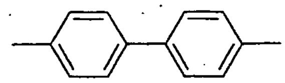
Chemical Formula 18-3

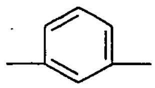
Chemical Formula 18-4

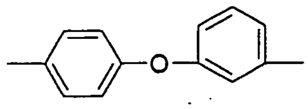
Chemical Formula 18-5

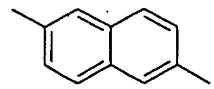
Chemical Formula 18-6

Typically, a polyamide structure unit may for example be one represented by Formulae (19-1 to -4) shown below.

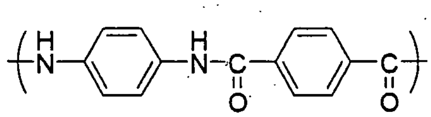
Chemical Formula 19-1

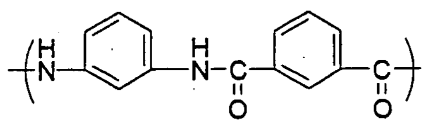
Chemical Formula 19-2

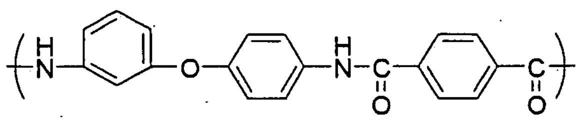
Chemical Formula 19-3

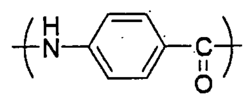
Chemical Formula 19-4

A polyammideimide structure unit may for example be one represented by Formula (20) shown below.

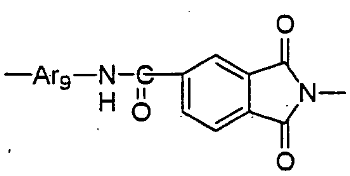
(Chemical Formula 20)

In Formula, $Ar_9$ is preferably selected from the examples of the structure of $Ar_5$ listed above.

Typically, a polyamideimide structure unit may for example be one represented by Formulae (21-1, -2) shown below.

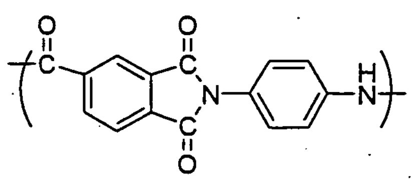

Chemical Formula 21-1

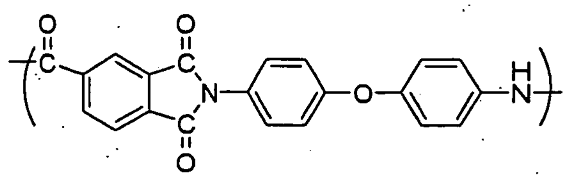

Chemical Formula 21-2

A polyoxydiazole structure unit may for example be one represented by Formula (22) shown below.

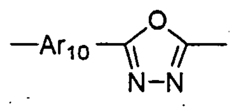

(Chemical Formula 22)

In Formula, $Ar_{10}$ is preferably selected from the examples of the structure of $Ar_5$ listed above.

Typically, a polyoxydiazole structure unit may for example be one represented by Formulae shown below.

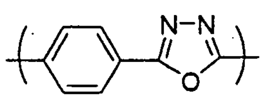

Chemical Formula 23-1

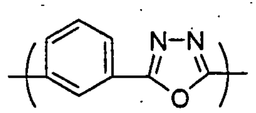

Chemical Formula 23-2

A polyazomethine structure unit may for example be one represented by Formula (24) shown below.

$$-Ar_{11}-\underset{H}{C}=N-Ar_{12}-N=\underset{H}{C}- \quad \text{(Chemical Formula 24)}$$

In Formula, each of $Ar_{11}$ and $Ar_{12}$ is preferably selected from the examples of the structure of $Ar_6$ listed above.

Typically, a polyazomethine-based structure unit may for example be one represented by Formulae (25-1 to -5) shown below.

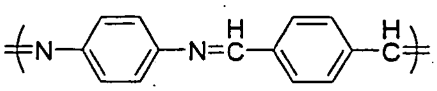

Chemical Formula 25-1

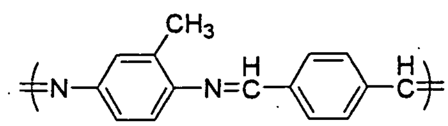

Chemical Formula 25-2

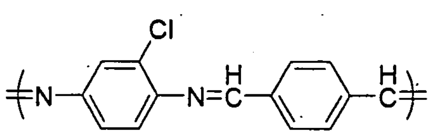

Chemical Formula 25-3

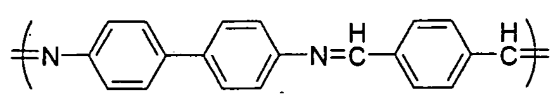

Chemical Formula 25-4

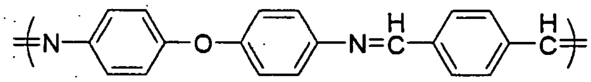

Chemical Formula 25-5

Such a polybenzazoleimide structure unit may for example be one represented by Formula (26) shown below.

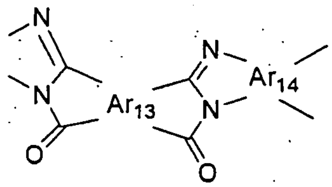

(Chemical Formula 26)

In Formulae, each of $Ar_{13}$ and $Ar_{14}$ is preferably selected from the examples of the structure of $Ar_4$ listed above.

Typically, such a polybenzazoleimide structure unit may for example be one represented by Formulae (27-1, -2) shown below.

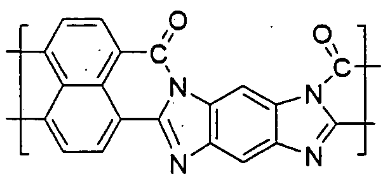

Chemical Formula 27-1

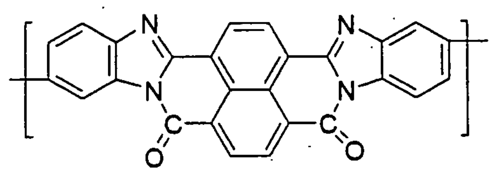

Chemical Formula 27-2

A polyether ketone structure unit and a polyether sulfonic acid unit generally have structures having aromatic units linked via ketone bonds or sulfone bonds together with ether bonds, and contain the structure components selected from Formulae (28-1 to -6) shown below.

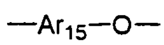

Chemical Formula 28-1

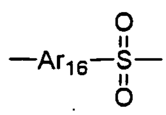

Chemical Formula 28-2

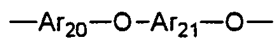

Chemical Formula 28-3

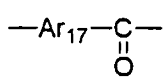

Chemical Formula 28-4

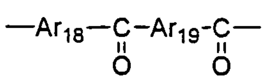

Chemical Formula 28-5

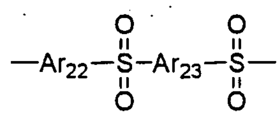

Chemical Formula 28-6

In Formulae, $Ar_{15}$ to $Ar_{23}$ independently from one another preferably denote those represented by Formulae shown below. On an aromatic ring shown here, various substituents may be present such as a methyl group, methoxy group, halogen group, trifluoromethyl group, hydroxyl group, nitro group, cyano group and the like.

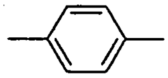

Chemical Formula 29-1

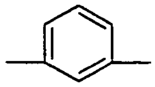

Chemical Formula 29-2

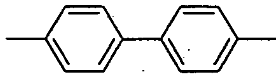

Chemical Formula 29-3

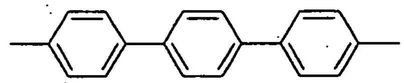

Chemical Formula 29-4

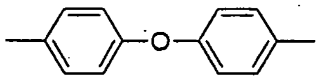

Chemical Formula 29-5

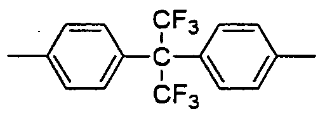

Chemical Formula 29-6

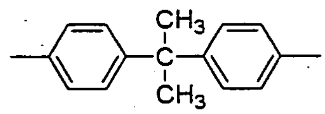

Chemical Formula 29-7

Typically, a polyether ketone structure unit may for example be one represented by Formulae (30-1 to 8) shown below.

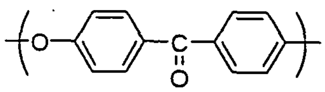

Chemical Formula 30-1

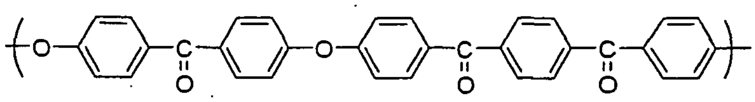

Chemical Formula 30-2

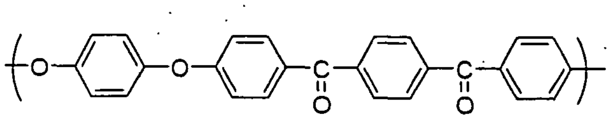

Chemical Formula 30-3

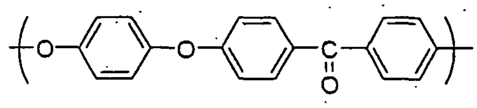

Chemical Formula 30-4

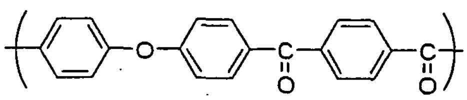

Chemical Formula 30-5

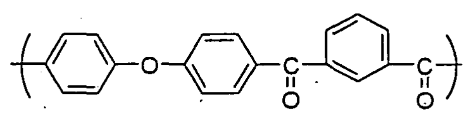

Chemical Formula 30-6

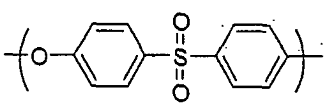

Chemical Formula 30-7

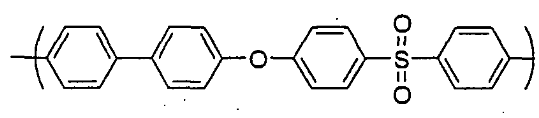

Chemical Formula 30-8

An aromatic polymer structure unit copolymerizable with such a polybenzazole structure unit does not strictly mean a repeating unit within a polymer chain, and rather means a structure unit capable of coexisting with the polybenzazole structure unit within a polymer main chain. Such a copolymerizable aromatic polymer structure unit may be copolymerized alone or in combination of two or more. In order to synthesize such a copolymer, an amino group, carboxyl group, hydroxyl group, halogen group and the like may be introduced into the unit terminal consisting of benzazole structure units and may serve as a reactant of such an aromatic synthesis, or a carboxyl group is introduced into the unite terminal containing such aromatic structure unites and allowed to serve as a reactant of the polybenzazole synthesis to be polymerized.

A polybenzazole described above is subjected to a condensation polymerization in a polyphosphoric acid solvent to give a polymer. The polymerization degree of the polymer is represented as a limiting viscosity, which is

preferably 15 dl/g or higher, more preferably 20 dl/g or higher. A degree below this range leads to a problematically reduced strength of a film obtained. The limiting viscosity is preferably 35 dl/g or lower, more preferably 26 dl/g or lower. A degree higher above this range leads to an elevated viscosity of the solution, which makes a processing difficult and puts a limitation on the concentration of a polybenzazole solution capable of forming an isotropic solution, resulting in a problematic difficulty in forming a film under an isotropic condition. These solutions are employed as polymer solutions after diluting them with solvents such as polyphosphoric acid, methanesulfonic acid and the like.

A porous film of a polybenzazole of the present invention is formed by steps for extruding and thinning, coagulating, washing and drying the film. As a means for obtaining a uniform porous structure, a method involving a contact with a poor solvent to effect the coagulation is employed. A poor solvent is a solvent miscible with a solvent for a polymer solution and may be either in a liquid phase or a gas phase. It is also preferable to use a combination of the coagulation by a poor solvent in a gas phase and the coagulation by a poor solvent in a liquid phase. While a poor solvent employed for a coagulation may for example be water, an aqueous solution of an acid or an aqueous solution of an inorganic salt as well as an organic solvent such as alcohols, glycols, glycerin and the like, the poor solvent employed for the coagulation should carefully be selected since some combination with a polybenzazole solution employed may cause problems such as a reduction in the surface porosity or the void ratio of a porous film or a non-continuous cavity formation inside of the porous film. In the coagulation of an isotropic polybenzazole solution according to the present invention, the film surface and internal structure and the void ratio can be controlled by selecting a poor solvent together with the coagulation condition from water vapor; aqueous solution of methanesulfonic acid, aqueous solution of phosphoric acid, aqueous solution of glycerin, as well as aqueous solutions of inorganic salts such as aqueous solution of magnesium chloride. An especially preferred coagulation means is a coagulation by contact with water vapor, coagulation by contact with water vapor for a short period at an early stage of the coagulation followed by contact with water, and coagulation by contact with an aqueous solution of methanesulfonic acid.

A method for forming a film of a polybenzazole solution according to the present invention is most preferably a procedure comprising introducing a thin film made by a roll, slit or press from a polymer solution sandwiched between at least two supports into a coagulating bath and peeling the supports off in the coagulating bath to effect the coagulation. As used herein, the thin film formation is to adjust the thickness generally at 10 μm to 500 μm in the pre-coagulation polymer solution state by employing the means described above, although the thickness may vary depending on the commercial demand. The structure and the arrangement of the roll, slit or press may be in various combinations. It is desirable to use a method in which a polymer solution sandwiched between at least two supports is sandwiched between at least two rolls and the rolls facing each other are rotated in different directions to feed the polymer solution in the form of a thin film.

The supports sandwiching the polymer solution being rolled is introduced via a guide roll into the coagulation bath, where they are peeled off whereby effecting the coagulation of the polymer solution to give a porous membrane. Prior to a complete coagulation of the polymer solution by peeling the supports in the coagulation bath, the polybenzazole is coagulated at least partly by a poor solvent or a vapor thereof which had been permeated through the supports, whereby controlling the film surface and internal structure and the void ratio.

The outermost support and the polymer solution here may sandwich a porous support, fabric or nonwoven fabric to form a composite membrane. The porous support, fabric or nonwoven fabric may be used directly as a support to form a composite membrane. The porous support, fabric or nonwoven fabric is preferably gas permeable or liquid permeable one. A support allowing a poor solvent for the polybenzazole or a vapor thereof to permeate is preferably a porous support made from a polypropylene, and otherwise porous supports made from various materials such as polyethylene and polytetrafluoroethylene can also be employed. Especially when using water or a solvent mixture of water with other solvent or aqueous solution as a coagulation solution, a porous supports enabling the permeation only of water vapor while preventing the permeation of water in the liquid phase is employed preferably. It may for example be a commercial membrane filter purported to have a pore size of 0.03 μm to 10 μm and a separator film for a cell.

As used herein, a coagulation bath means not only a tank containing a coagulation solution but also a zone where a gas, mist or vapor having a coagulating ability exists. A coagulation solution may for example be water, aqueous solution of metal salt, polyhydric alcohol, aprotic polar solvent, protic polar solvent as well as aqueous solutions of polyphosphoric acid and methanesulfonic acid which are solution-diluting solvents. A mist or vapor of these solution is also included. The temperature of the coagulation solution is preferably 10°C or higher and 70°C or lower. More preferably, the temperature is 30°C or higher and 60°C or lower. Generally, a membrane structure may vary depending on the balance between the migration of the coagulation solution into the polymer solution film and the effluent of the polymer solvent from the polymer solution thin film. An excessively low temperature of the coagulation solution leads to an insufficient liquid-liquid exchange between the coagulation solution and the polymer solvent, resulting in a difficulty in obtaining a desired film structure. An excessively high temperature of the coagulation solution basically provides a desired structure, but the strength is necessarily reduced to a substantial extent. In the present invention, the coagulation temperature is preferably 10°C or higher and 70°C or lower. More preferably, a temperature of 30°C or higher

and 60°C or lower serves to provide a porous membrane whose structure and strength are both satisfactory.

A polybenzazole solution employed in the present invention should be formed into a film using a composition under an isotropic condition for the purpose of obtaining a uniform porous film having a large void ratio, and a preferred range of the concentration of a polybenzazole solution is 0.3% by weight or higher, more preferably 0.5% by weight or higher, further preferably 0.8% by weight or higher. A concentration lower than this range may give a reduced viscosity of the polymer solution, which leads to a difficulty in molding and is disadvantageous from an economical point of view and also leads to a problematically reduced strength of the porous membrane. The range of the concentration is further preferably 3% by weight or less, more preferably 2% by weight or less, and especially 1.5% by weight or less. A concentration higher than this range may give a problematic anisotropy depending on the polymer composition or the polymerization degree of the polybenzazole. A porous membrane formed from an optically anisotropic polybenzazole solution is not preferable since a porous polybenzazole film having continuous voids at a high void ratio which allows a large amount of an ion-exchange resin to be impregnated.

For adjusting the concentration of a polybenzazole solution within the range specified above, the following procedure may be taken. Thus, a method in which a polymer solid is once separated from a polymerized polybenzazole solution which is combined with a solvent again and dissolved whereby adjusting the concentration, a method in which without separating a polymer solid from a polymer solution just being subjected to a condensation polymerization in polyphosphoric acid the polymer solution is combined with a solvent for dilution whereby adjusting the concentration, and a method in which a polymer solution at a concentration within the specified range is directly obtained by adjusting the polymerization composition of the polymer are contemplated.

A solvent employed preferably for adjusting the concentration of a polymer solution may for example be methanesulfonic acid, dimethylsulfuric acid, polyphosphoric acid, sulfuric acid, trifluoroacetic acid and the like, which may be employed in combination as a solvent mixture. Those especially preferred are methanesulfonic acid and polyphosphoric acid.

A porous film made from a polybenzazole thus coagulated is preferably washed thoroughly for the purpose of avoiding a problematic promotion of polymer decomposition due to a residual solvent or a problematic effluxion of a residual solvent upon using a composite electrolyte film. The washing can be accomplished by immersing the porous film in a washing solution. An especially preferred washing solution is water. The washing with water is continued preferably until the pH of the wash upon immersing the porous film in water becomes pH 5 to 8, more preferably 6.5 to 7.5.

The steps of extrusion, thin film formation, coagulation, washing and drying may be conducted continuously or each in a batch mode. It is also possible to add between steps other particular steps depending on the purpose, including impregnation, coating, lamination for making a composite, orientation, UV or electron beam, corona irradiation for a surface treatment, annealing and the like.

A method in which a porous film made from a polybenzazole obtained by a method described above is combined with an ion-exchange resin to give a composite ion-exchange membrane is discussed below. Thus, the porous film is immersed in an ion-exchange resin solution without drying to replace the fluid inside of the porous film with the ion-exchange resin solution and then dried to obtain a composite ion-exchange membrane. When the fluid inside of the porous film is different from the solvent composition of the ion-exchange resin solution, the fluid inside may be replaced previously so that the solvent composition becomes in agreement.

A porous film of the present invention undergoes a shrinkage of the void structure in response to the reduction in the volume of the fluid inside of the voids upon drying, resulting characteristically in a substantial reduction in the apparent volume of the film. When the drying is effected while restricting the shrinkage in the planar direction for example by means of the fixation to a metal frame without impregnating the inside of the porous film with an ion-exchange resin, the shrinkage occurs in the direction of the film thickness and the apparent film thickness of the porous film after drying becomes 0.5% to 10% of the film thickness before drying.

Due to such characteristics of the porous film, when the porous film is dried after replacing the fluid inside of the voids with an ion-exchange resin solution, the solvent of the ion-exchange resin solution impregnated in the voids evaporates, resulting in a reduction in the volume of the ion-exchange resin, in response to which the porous film itself undergoes a shrinkage, which allows a dense composite membrane structure in which the voids inside of the porous membrane is filled with the precipitated ion-exchange resin to be obtained readily. Such a composite membrane structure allows an inventive composite ion-exchange membrane to exhibit an excellent fuel permeation preventing ability. In the case of a porous film other than an inventive porous film, for example a porous film made from an oriented polytetrafluoroethylene polymer porous membrane, even if the solvent of an ion-exchange resin solution impregnated in the voids evaporates to reduce the volume of the ion-exchange resin solution, the absence of any accompanying shrinkage of the porous film leads to a disadvantage, including the formation of a large number of voids containing no ion-exchange resin in a resultant dried composite membrane and no formation of the surface layer of the ion-exchange resin containing no support on the both side of the porous film.

Also in the case of such a composite ion-exchange resin, since a porous film undergoes a substantial shrinkage, by adjusting the combination of the physical properties of the ion-exchange resin solution such as concentration, viscosity, solvent volatility and the like with the film thickness and the void ratio of the porous film, it becomes possible to form a composite layer in which the inside voids of the porous film is filled with the ion-exchange resin at the same time with allowing an excessive ion-exchange resin solution depositing on the both sides of the porous film or the ion-exchange resin solution exhausted from the inside of the porous film in response to the shrinkage of the film to be dried on the outside surface of the porous film to form a micropore-free ion-exchange resin layer, whereby allowing a structure having surface layers of the micropore-free ion-exchange resin on the both side of the composite layer as sandwiching the composite layer to be formed readily.

Since a film other than an inventive porous film, such as a porous film made from a polytetrafluoroethylene, undergoes no substantial shrinkage as described above, the voids will remain as they are even if the ion-exchange resin precipitates inside the porous film upon drying after impregnation with the ion-exchange resin solution and it is also impossible to form an ion-exchange resin layer sandwiching the porous film composite layer. Although such a condition may somewhat be ameliorated by repeating the impregnation of the ion-exchange resin and the drying several times, the process becomes complicated undesirably.

An ion-exchange resin employed in an inventive composite ion-exchange resin is not limited particularly, and those which may be employed in addition to a perfluorocarbonsulfonic acid polymer described above are at least one ionomer of polystyrenesulfonic acid, poly(trifluorostyrene)sulfonic acid, polyvinylphosponic acid, polyvinylcarboxylic acid, polyvinylsulfonic acid polymer, as well as an ionomer resulting from sulfonation, phosphonation or carboxylation of at least one of aromatic polymers such as polysulfone, polyphenylene oxide, polyphenylene sulfoxide, polyphenylene sulfide, polyphenylene sulfide sulfone, polyparaphenylene, polyphenylquinoxaline, polyaryl ketone, polyether ketone, polybenzazole and polyaramid polymer. As used herein, a polysulfone polymer includes at least one of polyethersulfone, polyarylsulfone, polyarylethersulfone, polyphenylsulfone and polyphenylenesulfone polymers. As used herein, a polyether ketone includes at least one of polyetherether ketone, polyether ketone-ketone, polyetherether ketone-ketone and polyether ketone ether-ketone polymers.

A solvent for an ion-exchange resin solution described above may be selected from solvents capable of dissolving the ion-exchange resin without dissolving, decomposing or extremely swelling a polybenzazole porous film. Nevertheless, since the ion-exchange resin is precipitated by removing the solvent after impregnating the film with the ion-exchange resin solution, the solvent is preferably one capable of being removed for example by an evaporation using a means such as heating or reduced pressure. Since an inventive polybenzazole porous film here exhibits a high heat resistance, it is possible to form a composite ion-exchange membrane using an ion-exchange resin solution containing a high boiling solvent which can not be employed in producing a composite ion-exchange membrane using a porous film made from a polytetrafluoroethylene which undergoes a creep at a temperature as low as 100°C, thus exhibiting an excellent aspect also in view of the selection of a wide range of ion-exchange resins.

While the concentration of an ion-exchange resin solution described above or the molecular weight of the ion-exchange resin is not limited particularly, they may be selected appropriately depending on the types of the ion-exchange resin or the film thickness of a composite ion-exchange membrane intended.

A composite ion-exchange membrane thus obtained preferably has an ion-exchange resin content of 50% by weight or more. More preferably the content is 80% or more. A content below this range is not preferable since it gives an increased conductive resistance of the membrane and a reduced water retaining ability of the membrane, which leads to an insufficient electricity generating ability.

An inventive ion-exchange membrane is characterized by its surface layers consisting of a support-free ion-exchange resin on the both side of the composite layer as sandwiching the composite layer as described above. Since the composite ion-exchange membrane possesses the composite layer and the surface layers, the composite ion-exchange membrane has a high mechanical strength, and is also excellent in terms of the close contact with an electrode layer when the electrode layer is formed on the surface. The thickness of each surface layer is 10 μm or more and not more than 50 μm, and it is preferable that each does not exceed the half of the entire thickness of the composite ion-exchange membrane. A thickness of the surface layer below the specified range may affect the close contact with the electrode layer adversely and leads to a problematic reduction in the ion conductivity. A thickness of the surface layer above the specified range results in a difficulty in allowing the reinforcing effect of the composite layer to reach the outermost surface of the composite ion-exchange membrane, and leads to a problematic peeling of the surface layer from the composite layer due to a substantial swelling only of the surface layer upon absorption of the moisture by the composite ion-exchange membrane. A further preferable range of the thickness of the surface layer is 2 μm or more and not more than 30 μm.

For the purpose of further improving the characteristics such as the mechanical strength and the ion conductivity of a composite ion-exchange membrane and the peeling performance of the ion-exchange resin layer formed on the surface, a method in which the composite ion-exchange membrane is subjected to a heat treatment under an appropriate condition is employed preferably. For the purpose of adjusting the thickness of the surface layer of the ion-exchange resin formed on the surface, a method in which the composite ion-exchange membrane is further immersed

in the composite ion-exchange resin solution or the composite ion-exchange membrane is coated with the ion-exchange resin solution prior to the drying whereby increasing the deposition of the ion-exchange resin layer, or alternatively, a part of the ion-exchange resin solution deposited on the porous film surface after immersion in the ion-exchange resin solution is scraped off using a scraper, air knife, roller and the like or absorbed into a material having a liquid absorbing ability such as a filter paper or a sponge whereby reducing the deposition of the ion-exchange resin layer is employed preferably. It is also possible to combine a method for further improving the close contact with the ion-exchange resin layer using a heat press.

An inventive composite ion-exchange membrane exhibits an excellent mechanical strength while possessing a high ion conductivity. It is also possible, by utilizing this aspect, to use as a composite ion-exchange membrane, especially a polymeric solid electrolyte membrane for a solid polymeric fuel cell.

An aramid employed in the present invention may for example be a polyparaphenylene terephthalamide or an aramid represented by any of Formulae 19-1 to 4.

A solvent for forming a solution of such an aramid may for example be a polar solvent such as N,N'-dimethylformamide, N,N'-dimethylacetamide, N-methyl-2-pyrrolidone, γ-butyrolactone and the like. It is also possible to use, if necessary, an auxiliary agent such as an amine including triethylamine and diethylenetriamine, an alkaline metal salt including sodium fluoride, potassium fluoride, cesium fluoride and sodium methoxide. It is also possible to use an acid such as sulfuric acid, polyphosphoric acid, methanesulfonic acid and the like. In the case of a polyacrylonitrile, a polar solvent described above, an aqueous solution of sodium thiocyanate or zinc chloride and nitric acid are exemplified.

For a polyamideimide employed in the present invention, an ordinary method such as an acid chloride method using trimellitic acid chloride and diamine and a diisocyanate method employing trimellitic anhydride and diisocyanate is exemplified. In view of production cost, the diisocyanate method is preferred.

An acid component employed for synthesizing a polyamideimide employed in the present invention is preferably trimellitic anhydride (chloride), a part of which may be replaced by other polybasic acid or anhydride thereof. For example, a tetracarboxylic acid such as pyromellitic acid, biphenyltetracarboxylic acid, benzophenone tetracarboxylic acid, biphenylether tetracarboxylic acid, ethylene glycol bistrimellitate and propylene glycol bistrimellitate and an anhydride thereof, an aliphatic dicarboxylic acid such as oxalic acid, adipic acid, malonic acid, sebacic acid, azelaic acid, dodecanedicarboxylic acid, dicarboxypolybutadiene, dicarboxypoly(acrylonitrile-butadiene) and dicarboxypoly (styrene-butadiene), an alicyclic dicarboxylic acid such as 1,4-cyclohexanedicarboxylic acid, 1,3-cyclohexanedicarboxylic acid, 4,4'-dicyclohexylmethanedicarboxylic acid and dimeric acid, an aromatic dicarboxylic acid such as terephthalic acid, isophthalic acid, diphenylsulfone dicarboxylic acid, diphenylether dicarboxylic acid and naphthalenedicarboxylic acid and the like are exemplified.

It is preferable to copolymerize one or more of butadiene-based rubbers, polyalkylene ethers and polyesters having any of a carboxyl group, hydroxyl group and amino group at the terminal. A butadiene-based rubber is preferably a dicarboxypolybutadiene, dicarboxypoly(acrylonitrile-butadiene), dicarboxypoly(styrenebutadiene), diaminopolybutadiene, diaminopoly(acrylonitrile-butadiene) or diaminoppoly(styrene-butadiene) whose molecular weight is 1000 or more.

By replacing a part of a trimellitic acid compound with a glycol, a polyalkylene ether or polyester copolymer can be obtained. A glycol may for example be an alkylene glycol such as ethylene glycol, propylene glycol, tetramethylene glycol, neopentyl glycol and hexanediol, a polyalkylene glycol such as polyethylene glycol, polypropylene glycol and polytetramethylene glycol, as well as a polyester having terminal hydroxyl groups synthesized from one or more of the dicarboxylic acids described above together with one or more of the glycols described above. It is preferable to copolymerize a polyethylene glycol whose molecular weight is 1000 or more or a polyester having terminal hydroxyl groups. The amount of such a copolymerization is preferably 2 to 30% by mole based on 100% by mole of the entire acid component. The copolymerization described above serves to enhance the toughness of a porous sheet.

A diamine (diisocyanate) component employed for synthesizing a polyamideimide may for example be an aliphatic diamine such as ethylene diamine, propylene diamine and hexamethylene diamine and a diisocyanate thereof, an alicyclic diamine such as 1,4-cyclohexane diamine, 1,3-cyclohexane diamine, isophorone diamine and 4,4'-dicyclohexylmethane diamine and a diisocyanate thereof, an aromatic diamine such as m-phenylene diamine, p-phenylene diamine, 4,4'-diaminodiphenylmethane, 4,4'-diaminodiphenyl ether, 4,4'-diaminodiphenyl sulfone, benzidine, o-tolidine, 2,4-tolylene diamine, 2,6-tolylene diamine and xylylene diamine and a diisocyanate thereof and the like, with 4,4'-diaminodiphenylmethane, o-tolidine diamine and isocyanates thereof being preferred in view of reactivity, cost and chemical resistance. It is further preferable to copolymerize o-tolidine and diisocyanate thereof. The amount of such a copolymerization is preferably 30 to 80% by mole based on 100% by mole of the entire amine component. This copolymerization serves to enhance the strength of a porous sheet.

A polyamideimide described above preferably has a logarithmic viscosity of 0.5 dl/g or higher and a glass transition temperature of 100°C or higher in view of the heat resistance and the strength.

A solvent capable of dissolving a polyamideimide employed in the present invention is not limited as long as it has such a function, and may for example be a polar solvent such as N,N'-dimethylformamide, N,N'-dimethylacetamide, N-methyl-2-pyrrolidone and γ-butyrolactone. If necessary, an auxiliary agent may be employed including an amine such as triethylamine and diethylene triamine and an alkaline metal salt such as sodium fluoride, potassium fluoride, cesium fluoride and sodium methoxide.

A solution in a solvent described above may be obtained by dissolving a polyamideimide in a solvent described above, or a solution obtained by a polymerization may directly be employed when the polyamideimide was polymerized by a solution method. In such a method, incorporation of an additive such as a pore size adjusting agent during or after polymerization, or adjustment of the polymer concentration may be carried out.

An aramid film and a polyamideimide film can be obtained using a solution described above by a film forming method similar to that for a polybenzazole solution, via a procedure in which a thin film made by a roll, slit or press from a polymer solution sandwiched between two supports is introduced into a coagulating bath and the supports are peeled off in the coagulating bath to effect the coagulation.

Best Modes for Carrying Out the Invention

The present invention is described further typically based on Examples shown below. Nevertheless, the present invention is not restricted by these Examples.

The methods for measurement and evaluation employed in Examples are described below.

(Evaluation Methods, Measurement Methods)

1. Polybenzazole film structure observation (by TEM)

A transmission electron microscope (TEM) was used to observe the sectional structure of a membrane in accordance with the following procedure.

First, a observation test piece was produced as described below. Thus, the water inside of a porous film sample after washing with water was replaced with ethanol, and then also replaced with an epoxy monomer sufficiently. The sample was allowed to stand for 6 hours at 45°C in the epoxy monomer, and then subjected to a heat treatment for 20 hours at 60°C whereby setting the epoxy (epoxy embedding). The sample thus embedded with the epoxy was cut by a microtome fitted with a diamond knife into a super-thin section having a thickness allowing the interference color to be silver to gold, which was then treated with a KOH-saturated ethanol solution for 15 minutes to remove the epoxy (epoxy removal). Then the sample was washed with ethanol followed by water, stained with $RuO_4$ and then subjected to a carbon vapor deposition, and then observed at an acceleration voltage of 200 kV using a TEM manufactured by JEOL Ltd. (JEM-2010).

2. Polybenzazole film structure observation (by AFM)

The structure was observed using an atomic force microscope (AFM) in accordance with the following procedure. Thus, an AFM manufactured by Seiko Instruments Inc. (SPA 300, observation mode: DFM mode, Sensor lever: SI-DF3, Scanner: FS-100A) was used to observe the surface structure of a porous film which was not dried but retained on the sample stage in water.

3. Polybenzazole limiting viscosity

The viscosity of a polymer solution prepared at a concentration of 0.5 g/l using methanesulfonic acid as a solvent was measured in a 25°C thermostat chamber using an Ubbelohde viscometer and calculated.

4. Polybenzazole film thickness

The thickness of a porous film which was not dried was measured by a method described below. Using a micrometer whose measurable load was variable, the thickness of a film in water under each load was measured. The measured thickness was plotted verses the load, and the value of the intercept when extrapolating the linear part to load 0 was assumed as the thickness, and the average of the thicknesses measured at 5 positions per sample was designated as the film thickness.

5. Composite ion-exchange membrane thickness and thickness of layer constituting the same

For measuring the thicknesses of a composite layer constituting the composite ion-exchange membrane and the surface layer consisting of an ion-exchange resin excluding a porous film formed on the both side of a composite

layer with sandwiching the composite layer, a composite membrane piece cut out as a porous film in a size of 300 μm width and 5 mm length was embedded in a resin whose composition was LUVEAC 812 (made by Nacalai Tesque Inc.) /LUVEAC NMA (made by Nacalai Tesque Inc.)/DMP 30 (TAAB) = 100/89/4, and cured for 12 hours at 60°C to obtain a sample block. Using an ultra-microtome (2088 ULTROTOME® V manufactured by LKB Co., Ltd.), the tip of the block was shaved using a diamond knife (SK2045 made by Sumitomo Electric Industries, Ltd.) so that a smooth section was exposed. The section of the composite membrane thus exposed was photographed using an optical microscope, and measurement was on the basis of the comparison with a scale having a known length photographed at the same magnification. While there may be a case where the void ratio of the porous membrane support and where there was no clear interface between at least one surface layer and the composite layer inside thereof and the structure near the interface is altered continuously, such a case is subjected to a procedure in which a part closest to the outer surface of the composite ion-exchange membrane among the parts where a continuous structural alteration can be identified by the optical microscope is regarded as the outermost surface of the composite layer, the distance from which to the outer surface of the composite ion-exchange membrane is regarded as the thickness of the surface layer.

6. Ion exchange resin (ICP) content of composite ion-exchange membrane

The ion-exchange resin content of a composite ion-exchange membrane was measured by a method described below. The unit weight Dc [g/$m^2$] of a composite ion-exchange membrane dried under vacuum for 6 hours at 11°C was measured, and the unit weight Ds (g/$m^2$) of a porous film measured after drying a porous film produced under the condition similar to that employed for producing the composite ion-exchange membrane which this time was not combined with the ion-exchange resin was also used to calculate the ion-exchange resin content in accordance with the following equation.

Ion exchange resin content (% by weight) = (Dc - Ds)/Dc × 100

The ion-exchange resin content of the composite ion-exchange membrane can be measured also by a method described below. Thus, the composite ion-exchange membrane was immersed in a solvent capable of dissolving either one of the porous film component or the ion-exchange resin component in the composite ion-exchange membrane to extract either one component off, and the change in the weight when compared with the initial composite ion-exchange membrane was measured to obtain the ion-exchange resin content.

7. Ion exchange resin strength and tensile elasticity

The strength of an ion-exchange resin was measured using a "Tensilon" manufactured by "Orientec Co. Ltd." in atmosphere of 25°C and 50% relative humidity. A sample as a strip whose width was 10 mm was measured with a chuck distance of 40 mm and a tensile speed of 20 mm/sec to obtain a stress strain curve, which was then used in the calculation.

8. Ion conductivity of ion-exchange membrane

The ion conductivity σ was measured as described below. On a laboratory-made measurement probe (made from tetrafluoroethylene), platinum wires (diameter: 0.2 mm) were pressed against the surfaces of a strip membrane sample whose width was 10 mm, and the sample was retained in a 95% RH chamber at constant temperature and humidity, and the alternating impedance at 10kHz between the platinum wires was measured using 1250 FREQUENCY RESPONSE ANALYZER manufactured by SOLARTRON, The measurement was conducted while changing the inter-electrode distance from 10 mm to 40 mm by a 10 mm interval, and the slope Dr [Ω/cm] of the line obtained by plotting the inter-electrode distance versus the measured resistance was used in the calculation in accordance with the following equation while canceling the contact resistance between the membrane and the platinum wire.

$$\sigma \text{ (S/cm)} = 1/(\text{membrane width} \times \text{membrane thickness (cm)} \times \text{Dr})$$

9. Gas permeability of ion-exchange membrane

The gas permeability of an ion-exchange membrane was measured by the following method. An ion-exchange membrane was placed on a mesh stainless steel support, immobilized to a holder, and then one side of the ion-exchange membrane was exposed to the flow of a helium gas saturated with water vapor at room temperature under a gauge pressure of 0.09 MPa, and the amount of the helium gas permeate to the other side of the ion-exchange membrane was determined by a soap membrane orifice.

10. Electricity generation property of ion-exchange membrane

A 20% solution of "Nafion®" (trade name) manufactured by DuPont (product code: SE-20192) was combined with a platinum-loaded carbon (Carbon: Valcan XC-72 manufacture by Cabot, platinum load: 40% by weight) so that the weight ratio of the platinum and "Nafion®" became 2.7 : 1, and stirred to obtain a catalyst paste. This catalyst paste was coated onto a Toray carbon paper TGPH-050 so that the platinum deposition became 1 mg/cm$^2$, and then dried to obtain an electrode catalyst layer-carrying gas diffusion layer. Between two electrode catalyst layer-carrying gas diffusion layers, a membrane sample was sandwiched so that the electrode catalyst layer was brought into contact with the membrane sample, and heated under pressure for 3 minutes at 120°C and 2 MPa by a hot press method to obtain a membrane-electrode assembly. This assembly was integrated into a fuel cell for laboratory assessment manufactured by Electrochem, namely, CELL FC25-02SP, and examined for the electricity generating property at a cell temperature of 80°C, gas moisturizing temperature of 80°C, at flow rates of 300 ml/min for hydrogen as a fuel gas and 1000 ml/min for air as an oxidizing gas.

11. Physical properties of dried polybenzazole film

(Surface roughness)

A film after drying was examined for a square mean roughness using a tri-dimensional non-contact surface shape measurement system "Micromap" manufactured by Ryoka Systems Inc.

12. Tensile elasticity of polybenzazole film

A film after drying was cut in a longitudinal direction (MD direction) or widthwise direction (TD direction) into a strip of 100 mm in length and 10 mm in width, which was subjected to a tensile test with a tensile speed of 50 mm/sec and a chuck distance of 40 mm using a tensile measurement device (Shimadzu Corp. Autograph, model AG-5000A) to determine the tensile elasticity.

13. Temperature dependency of elasticity and % elasticity keeping of polybenzazole film

A film after drying was cut in a longitudinal direction (MD direction) or widthwise direction (TD direction) into a strip of 40 mm in length and 5 mm in width which was subjected to a measurement at a temperature ranging from room temperature to 400°C at an elevation speed of 5°C/min and also at 10 Hz using a dynamic viscosity meter (manufactured by IT KEISOKU SEIGYO Inc. model DVA-225). As an elasticity keeping ratio, the elasticity ratio of 300°C/30°C was employed.

14. Interlaminar peeling test of polybenzazole film

A film after drying was cut in a longitudinal direction (MD direction) or widthwise direction (TD direction) into a strip of 20 mm in length and 10 mm in width, and the both sides of the film were stuck to the adhesion surfaces of adhesive tapes.

The tape was peeled slowly with a tensile speed of 50 mm/sec and a chuck distance of 40 mm using a tensile measurement device (Shimadzu Corp., Autograph®, model AG-5000A) to examine whether there was any interlaminar peeling phenomenon which was observed as a migration of the film onto the adhesion surfaces of the both adhesive tapes (see Fig. 2).

15. Observation of aramid film and polyamide film surface micropore

Using a scanning electron microscope (manufactured by Hitachi, Ltd. Model S800) at a magnification of 5000, the presence of micropores was investigated.

16. Thickness accuracy (change ratio in thickness) of aramid film and polyamideimide film

The thickness was measured using a micrometer (manufactured by Feinprüf GMBH, "Millitron 1245D"). The thickness unevenness was designated as a % obtained by measuring the film thickness of a resultant 20 mm × 100 mm film at 10 positions and dividing the difference between the maximum thickness and the minimum thickness by the mean thickness.

17. Uniformity of both sides of aramid film and polyamideimide film

The surfaces on the both sides of a film were evaluated visually and judged as poor when the surface gloss or roughness was clearly different between the both sides, and judged as good when there was no clear difference between the both sides.

18. Logarithmic viscosity of polyamideimide

A solution obtained by dissolving 0.5 g of a polyamideimide in 100 ml of N-methyl-2-pyrrolidone was kept at 30°C and subjected to the measurement using an Ubbelohde viscometer.

19. Glass transition temperature of polyamideimide film

A polyamideimide-based film having the measurement size of 4 mm width and 15 mm length was subjected to the measurement using a "Rheospectra DVE-V4" manufactured by Rheology Co., Ltd. with a vibration at 110 Hz to obtain a loss elasticity of the dynamic viscoelasticity, the inflection point of which was regarded as a glass transition temperature.

(Example A1)

A solution containing 14% by weight of a polyphenylene cisbenzobisoxazole polymer of IV = 24 dl/g in polyphosphoric acid was diluted with methanesulfonic acid to form an isotropic solution whose polyparaphenylene cisbenzobisoxazole concentration was 2.5% by weight. This solution was passed through a filter purported to have a pore size of 20 μm, and then sandwiched between two porous supports made from a polypropylene provided between two counter rolls, which were then rotated in opposite directions to roll the solution while feeding the solution together with the polypropylene porous supports, and then coagulated for 30 minutes in atmosphere of the chamber kept constantly at 25°C and 80% relative humidity, and then introduced into a coagulation bath. The coagulation solution was water at 60°C. During the step described above, the gap between the counter rolls was adjusted so that the solution thickness became 200 μm. In the coagulation bath, the polypropylene porous supports were peeled off and the solution was brought into contact with the coagulation solution to effect a further coagulation. A schematic view of the production method is shown in Fig. 1. Thereafter, the produced film was washed with water until the wash exhibited pH 7±0.5, whereby obtaining a porous film made from the polybenzazole. The resultant polybenzazole porous film was proven to be a porous film having continuous pores whose openings were present on the both sides, as evident from a surface morphology observation using an atomic force microscope and a sectional morphology observation using a transmission electron microscope. For a dried membrane, the coagulated film after washing with water obtained as described above was subjected to a heat fixation for 20 seconds at 150°C while the both ends were held by a tenter, whereby obtaining a polybenzazole film whose thickness was 5.2 μm. The film after drying was examined for a square mean roughness using a tri-dimensional non-contact surface shape measurement system "Micromap" manufactured by Ryoka Systems Inc. The results of the measurements of the interlaminar peeling, tensile elasticity and dependency of elasticity on temperature are shown in Table 2.

(Comparative Example A1)

A solution containing 14% by weight of a polyparaphenylene cisbenzobisoxazole polymer of IV=24 dl/g in polyphosphoric acid was diluted with methanesulfonic acid to form an isotropic solution whose polyparaphenylene cisbenzobisoxazole concentration was 2.5% by weight. This solution was subjected to a film forming process at a film forming speed of 5 mm/second using an applicator whose clearance was 300 μm on a glass plate heated at 70°C. Since under this condition the polybenzazole solution became highly viscose and streaks were formed in the direction of a squeegee, it was impossible to obtain a smooth film. The solution film formed on the glass plate as described above was coagulated by placing in a chamber kept constantly at 25°C and 80% relative humidity, and the resultant film, and the resultant film was washed with water until the wash exhibited pH7±0.5, whereby obtaining a porous film made from the polybenzazole. The resultant porous film had a dense structure of the surface on the side in contact with the support but had a porous structure on the surface on the side not in contact with the support, as evident from a surface morphology observation using an atomic force microscope and a sectional morphology observation using a transmission electron microscope, whereby proving that it was a membrane which did not have the openings on the both sides.

(Comparative Example A2)

A solution containing 14% by weight of a polyparaphenylene cisbenzobisoxazole polymer of IV = 24 dl/g in polyphosphoric acid was diluted with methanesulfonic acid to form an isotropic solution whose polyparaphenylene cisbenzobisoxazole concentration was 2.5% by weight. This solution was passed through a filter purported to have a pore size of 20 μm, and then sandwiched between two supports made from a polyethylene terephthalate film provided between two counter rolls, which were then rotated in opposite directions to roll the solution while feeding the solution together with the polyethylene terephthalate film supports, and then introduced into a coagulation bath. The coagulation solution was water at 60°C. During the step described above, the gap between the counter rolls was adjusted so that the solution thickness became 200 μm. In the coagulation bath, the polyethylene terephthalate film supports were peeled off and the solution was brought into contact with the coagulation solution to effect a further coagulation. Thereafter, the produced film was washed with water until the wash exhibited pH 7±0.5, whereby obtaining a porous film made from the polybenzazole. The resultant polybenzazole porous film was proven to be a film having no openings on the both sides, as evident from a surface morphology observation using an atomic force microscope and a sectional morphology observation using a transmission electron microscope. For a dried membrane, the coagulated film after washing with water obtained as described above was subjected to a heat fixation for 20 seconds at 150°C while the both ends were held by a tenter, whereby obtaining a polybenzazole film whose thickness was 5.4 μm. The film after drying was examined for a square mean roughness using a tri-dimensional non-contact surface shape measurement system "Micromap" manufactured by Ryoka Systems Inc. The results of the measurements of the interlaminar peeling, tensile elasticity and dependency of elasticity on temperature are shown in Table A1.

Table A1

| | Example A1 | Comparative Example A2 |
|---|---|---|
| Film forming method | Counter rolls PET film support | Counter rolls Porous polypropylene film support |
| Surface roughness (μm) | 0.08 | 0.30 |
| Interlaminar peeling MD/TD | Absent/Absent | Absent/Present |
| Tensile elasticity MD/TD (kg/mm$^2$) | 980/950 | 580/540 |
| Elasticity retention MD direction (%)<br>300°C/30°C<br>400°C/30°C | <br>82<br>75 | <br>80<br>72 |

From Comparative Example A1, it was impossible to obtain a smooth film by the production method employing the rolling, since the polybenzazole solution became highly viscose and allowed the streaks to be formed in the direction of the squeegee. In addition, the surface on the side in contact with the support underwent the formation of a dense structure. On the other hand, by the production method according to the present invention which is Example A1, a smooth film can be obtained even if the polybenzazole becomes highly viscose and a porous membrane having continuous pores whose openings are present on the both surfaces can be produced. When Comparative Example A2 is carried out using the supports through which a poor solvent such as the polybenzazole or a vapor thereof could not permeate to effect the molding followed immediately by introduction into the coagulation bath containing the coagulation solution which is a poor solvent having a strong coagulating ability where the supports are peeled to effect the direct contact with the coagulation solution whereby accomplishing the coagulation, the surface structure of the membrane becomes dense and does not allow the porous structure to be formed.

(Example A2)

A solution containing 14% by weight of a polyparaphenylene cisbenzobisoxazole polymer of IV = 24 dl/g in polyphosphoric acid was diluted with methanesulfonic acid to form an isotropic solution whose polyparaphenylene cisbenzobisoxazole concentration was 2.5% by weight. This solution was passed through a filter purported to have a pore size of 20 μm, and then sandwiched between two porous film supports made from a polypropylene provided between two counter rolls, which were then rotated in opposite directions to roll the solution while feeding the solution together with the polypropylene porous supports, and then coagulated for 30 minutes in atmosphere of the chamber kept constantly at 25°C and 80% relative humidity, and then introduced into a coagulation bath. The coagulation solution

was water at 60°C. During the step described above, the gap between the counter rolls was adjusted so that the solution thickness became 200 μm. In the coagulation bath, the polypropylene porous supports were peeled off and the solution was brought into contact with the coagulation solution to effect a further coagulation. Thereafter, the produced film was washed with water until the wash exhibited pH7±0.5, whereby obtaining a porous film made from the polybenzazole. This porous film was fixed to a stainless steel frame in water and the water inside of the porous film was replaced with a solvent mixture of water : ethanol : 1-propanol = 26 : 26 : 48 (weight ratio) which was almost similar to the solvent composition of a 20% solution of "Nafion®" (trade name) manufactured by DuPont (product code: SE-20192) which was an ion-exchange resin solution. This porous film was immersed for 15 hours at 25°C in a 20% solution of " Nafion®" (trade name) and then taken out, and the solvent for the "Nafion®" (trade name) solution impregnating the inside of the membrane and depositing on the surfaces of the membrane was evaporated in the air whereby being dried. The dried film was subjected to a preliminary heat treatment for 1 hour in an oven at 60°C to remove any residual solvent, followed by a heat treatment for 1 hour at 150°C in a nitrogen atmosphere to produce a composite ion-exchange membrane of Example A2.

(Comparative Example A3)

As Comparative Example A3, a commercially available "Nafion®" 112 (trade name) manufactured by DuPont was employed. This film is a proton exchange membrane made from a perfluorocarbon sulfonic acid polymer similarly to the "Nafion®" polymer contained in a 20% solution of "Nafion®" employed in Example A1 and a 10% solution of "Nafion®" employed in Example A2, and employed widely as a proton exchange membrane for a solid polymeric fuel cell.

(Comparative Example A4)

A solution containing 14% by weight of a polyparaphenylene cisbenzobisoxazole polymer of IV = 24 dl/g in polyphosphoric acid was diluted with methanesulfonic acid to form an optically anisotropic solution whose polyparaphenylene cisbenzobisoxazole concentration was 8% by weight. This solution was passed through a filter purported to have a pore size of 20 μm, and then sandwiched between two porous supports made from a polypropylene provided between two counter rolls, which were then rotated in opposite directions to roll the solution while feeding the solution together with the polypropylene porous supports, and then coagulated for 30 minutes in atmosphere of the chamber kept constantly at 25°C and 80% relative humidity, and then introduced into a coagulation bath. The coagulation solution was water at 60°C. During the step described above, the gap between the counter rolls was adjusted so that the solution thickness became 200 μm. In the coagulation bath, the polypropylene porous supports were peeled off and the solution was brought into contact with the coagulation solution to effect a further coagulation. Thereafter, the produced film was washed with water until the wash exhibited pH7±0.5, whereby obtaining a porous film. This film was fixed to a stainless steel frame in water and the water inside of the porous film was replaced with a solvent mixture of water : ethanol : 1-propanol = 26 : 26 : 48 (weight ratio) which was almost similar to the solvent composition of a 20% solution of "Nafion®" (trade name) manufactured by DuPont (product code: SE-20192) which was an ion-exchange resin solution. This porous film was immersed for 15 hours at 25°C in a 20% solution of "Nafion®" (trade name) and then taken out, and the solvent for the "Nafion®" (trade name) solution impregnating the inside of the membrane and depositing on the surfaces of the membrane was evaporated in the air whereby being dried. The dried film was subjected to a preliminary heat treatment for 1 hour in an oven at 60°C to remove any residual solvent, followed by a heat treatment for 1 hour at 150°C in a nitrogen atmosphere to produce a composite ion-exchange membrane of Comparative Example A4.

(Comparative Example A5)

A solution containing 14% by weight of a polyparaphenylene cisbenzobisoxazole polymer of IV = 24 dl/g in polyphosphoric acid was diluted with methanesulfonic acid to form an isotropic solution whose polyparaphenylene cisbenzobisoxazole concentration was 2.5% by weight. This solution was subjected to a film forming process at a film forming speed of 5 mm/second using an applicator whose clearance was 300 μm on a glass plate heated at 70°C. Since under this condition the polybenzazole solution became highly viscose and streaks were formed in the direction of a squeegee, it was impossible to obtain a smooth film. The solution film formed on the glass plate as described above was coagulated by placing in a chamber kept constantly at 25°C and 80% relative humidity, and the resultant film, and the resultant film was washed with water until the wash exhibited pH 7±0.5, whereby obtaining a porous film. This film was fixed to a stainless steel frame in water and the water inside of the porous film was replaced with a solvent mixture of water:ethanol:1-propanol=26:26:48 (weight ratio) which was almost similar to the solvent composition of a 20% solution of "Nafion®" (trade name) manufactured by DuPont (product code: SE-20192) which was an ion-exchange

resin solution. This porous film was immersed for 15 hours at 25°C in a 20% solution of "Nafion®" (trade name) and then taken out, and the solvent for the "Nafion® " (trade name) solution impregnating the inside of the membrane and depositing on the surfaces of the membrane was evaporated in the air whereby being dried. The dried film was subjected to a preliminary heat treatment for 1 hour in an oven at 60°C to remove any residual solvent, followed by a heat treatment for 1 hour at 150°C in a nitrogen atmosphere to produce a composite ion-exchange membrane of Comparative Example A5.

The physical parameters of Example A2, Comparative Examples A3, A4 and A5 are shown in Table A2.

Table A2

| | | Example A2 | Comparative Example A3 | Comparative Example A4 | Comparative Example A5 |
|---|---|---|---|---|---|
| Entire thickness composite ion-exchange membrane | μm | 50 | 49 | 48 | 53 |
| Thickness of Surface layer B | μm | 17 | | 15 | 18 |
| Thickness of Composite layer | μm | 19 | | 21 | 20 |
| ICP content | wt% | 95 | 100 | 46 | 39 |
| Ion conductivity | S/cm | 0.19 | 0.20 | 0.04 | 0.01 |
| Break strength | MPa | 27 | 22 | 144 | 13 |
| Tensile elasticity | MPa | 863 | 317 | 2825 | 824 |
| Gas permeability | $cm^3 \cdot cm/cm^2 \cdot s \cdot MPa$ | $1.6 \times 10^{-6}$ | $3.6 \times 10^{-6}$ | $1.5 \times 10^{-6}$ | $1.2 \times 10^{-6}$ |
| Power-generating performance | $A/cm^2$ (at 0.2 V) | 0.7 | 0.8 | 0.2 | 0.1 |

The composite ion-exchange membrane of Example 2A was proven to be an ion-exchange membrane having higher break strength and tensile elasticity when compared with the commercially available "Nafion®" 112 membrane which was Comparative Example A3. It was also proven that the composite ion-exchange membrane of Example 2A possessed excellent characteristics required in a polymeric solid electrolyte membrane for a fuel cell since its gas permeability was kept at a level less than the half of the value of the porous support-free Comparative Example A3 without undergoing a substantial reduction in the ion conductivity or the electricity generating performance in spite that it contained porous supports inside of it. When using a film made from the polybenzazole obtained from an optically anisotropic solution of Comparative Example A4, the both of the ion conductivity and the electricity generating performance were reduced, and it was impossible to obtain excellent characteristics required in a polymeric solid electrolyte membrane for a fuel cell. The composite ion-exchange membrane employing the porous film made by the rolling method of Comparative Example A5 had a problematic difficulty in obtaining a smooth membrane (film) and underwent a reduction both in the ion conductivity and the electricity generating performance, thus being impossible to possess excellent characteristics required in a polymeric solid electrolyte membrane for a fuel cell.

(Example B1)

A 3% by weight solution of a polyparaphenylene terephthalamide resin whose logarithmic viscosity was 6 in 100% sulfuric acid was passed through a filter purported to have a pore size of 20 μm, and then sandwiched between two porous supports made from a polypropylene provided between two counter rolls, which were then rotated in opposite directions to roll a dope while feeding together with the polypropylene porous supports, and then introduced into a coagulation bath. The coagulation solution was 30% sulfuric acid at 25°C. During the step described above, the gap between the counter rolls was adjusted so that the solution thickness became constant. In the coagulation bath, the polypropylene porous supports were peeled off and the resin solution thin later was brought into contact with the coagulation solution to effect a further coagulation. A schematic view of the production method is shown in Fig. 1.

Thereafter, the resin film thus formed was washed with warm water at 50°C, then dried at 130°C under tension, whereby obtaining an aramid film whose thickness was 25 μm. The results of the evaluation of the resultant film are shown in Table B1.

(Comparative Example B1)

An aramid film of Comparative Example B 1 was obtained similarly to Example B 1 except for employing an alternative procedure in which a resin solution whose polyparaphenylene terephthalic amide concentration was 15% by weight was extruded via a die onto a biaxially oriented polyester film whose thickness was 100 μm to form a thin layer of the aramid solution which was then brought into contact with a coagulation solution. The results of the evaluation of the resultant film are shown in Table B 1.

(Example B2)

An aramid film of Example B2 was obtained similarly to Example B 1 except for employing an alternative procedure in which the aramid composition was changed to a copolymer whose 20% by mole of the diamine component had been replaced with 4,4-diaminodiphenylsulfone, the solvent was changed to dimethylformamide, the aramid concentration was 10% by weight and a composite laminate sandwiched between two biaxially oriented polyester film supports was brought into contact with a coagulation solution. The results of the evaluation of the resultant film are shown in Table B1.

(Example B3)

An aramid film of Example B3 was obtained similarly to Example B 1 except for employing an alternative procedure in which the aramid composition was changed to a copolymer whose 20% by mole of the diamine component had been replaced with 4,4-diaminodiphenylsulfone, the solvent was changed to dimethylformamide, and a composite laminate sandwiched between two porous supports was subjected to a preliminary coagulation in an atmosphere kept constant at 50°C and 90% RH before being brought into contact with a coagulation solution which was water. The results of the evaluation of the resultant film are shown in Table B1.

The aramid films of Examples B1 to B3 were excellent in terms of the thickness accuracy and the uniformity in the structure between the both sides of the film, thus being highly suitable to a practical use. In addition, the respective production methods involved simple devices which gives an economical advantage. On the other hand, the aramid film obtained in Comparative Example B 1 had a poor thickness accuracy and a poor uniformity in the structure between the both sides of the film, thus being poorly suitable to a practical use. In addition, it was poor also from an economical point of view unlike to Example B 1 because it needed an extruder and a die for extruding the aramid solution which raised the cost of equipments.

Table B1

| | Film thickness accuracy Thickness variation (%) | Film surface structure | Uniformity between both sides of film |
|---|---|---|---|
| Example B1 | 5.2 | Porous | Good |
| Example B2 | 4.9 | Non-porous | Good |
| Example B3 | 5.2 | Porous | Good |
| Comparative Example B1 | 10.5 | Porous | Poor |

(Example C1)

A four-necked flask fitted with a thermometer, condenser and nitrogen gas inlet was charged with 1 mole of trimellitic anhydride (TMA), 1 mole of diphenylmethane diisocyanate (MDI) and 0.01 mole of potassium fluoride together with N-methyl-2-pyrrolidone at a solid concentration of 20% by weight, stirred for 1.5 hours at 120°C, and then heated up to 180°C at which the stirring was continued for about 3 hours whereby synthesizing a polyamideimide. The resultant polyamideimide had a logarithmic viscosity of 0.86 dl/g and a glass transition temperature of 290°C.

The polyamideimide solution described above was passed through a filter purported to have a pore size of 20 μm, and then sandwiched between two porous supports made from a polypropylene provided between two counter rolls, which were then rotated in opposite directions to roll a dope while feeding together with the polypropylene porous

supports, and then introduced into a coagulation bath. The coagulation solution was water/isopropanol (volume ratio: 4/1) at 25°C. During the step described above, the gap between the counter rolls was adjusted so that the polymer solution thickness became constant. In the coagulation bath, the polypropylene porous supports were peeled off and the polyamideimide solution in the form of a film was brought into contact with the coagulation solution to effect a further coagulation. A schematic view of the production method is shown in Fig. 1. Thereafter, the film thus formed was dried at 130°C under tension, whereby obtaining a polyamideimide film whose thickness was 25 µm. The results of the evaluation of the resultant film are shown in Table C1.

(Comparative Example C1)

A polyamideimide film of Comparative Example C1 was obtained similarly to Example C1 except for employing an alternative procedure in which the polyamideimide solution was extruded via a die onto a biaxially oriented polyester film whose thickness was 100 µm to form the polyamideimide solution in the form of a film which was then brought into contact with a coagulation solution. The results of the evaluation of the resultant film are shown in Table C1.

(Example C2)

A polyamideimide film of Example C2 was obtained similarly to Example C1 except for using 0.9 mole of TMA and 0.1 mole of dicarboxypoly(acrylonitrile-butadiene) rubber (UBE INDUSTRIES LTD., "Hycar" CTBN1300 x 13: molecular weight: 3500) as acid components. The results of the evaluation of the resultant film are shown in Table C1. The polyamideimide obtained in this Example had a logarithmic viscosity of 0.65 dl/g and a glass transition temperature of 203°C. The results of the evaluation of the resultant film are shown in Table C1.

(Example C3)

Using the devices employed in Example C1, 0.94 mole of TMA, 0.06 mole of polyproplyene glycol whose molecular weight was 2000 and 1.02 mole of isophorone diisocyanate were charged together with γ-butyrolacton at a solid concentration of 50% by weight, reacted for 3 hours at 200°C, and then diluted with N-methyl-2-pyrrolidone so that the solid concentration became 20% by weight whereby synthesizing a polyamideimide solution. The resultant polyamideimide had a logarithmic viscosity of 0.63 dl/g and a glass transition temperature of 198°C. A polyamideimide film of Example C3 was obtained similarly to Example C 1 using the polyamideimide solution obtained as described above. The results of the evaluation of the resultant film are shown in Table C1.

(Example C4)

Using the devices employed in Example C1, 0.93 mole of TMA, 0.07 mole of polycaprolacton (PLACCEL 220 made by Daicel Chemical Industries, Ltd., molecular weight: 2000), 1.02 mole of MDI and 0.02 mole of potassium fluoride were charged together with γ-butyrolacton at a solid concentration of 20% by weight, reacted for 5 hours at 200°C, and then diluted with N-methyl-2-pyrrolidone so that the solid concentration became 20% by weight whereby synthesizing a polyamideimide solution. The resultant polyamideimide had a logarithmic viscosity of 0.71 dl/g and a glass transition temperature of 175°C. A polyamideimide film of Example C4 was obtained similarly to Example C 1 using the polyamideimide solution obtained as described above. The results of the evaluation of the resultant film are shown in Table C1.

(Example C5)

Using the devices employed in Example C1, 0.5 mole of TMA, 0.5 mole of a dimeric acid, 0.5 mole of o-tolidine diisocyanate and 0.5 mole ofMDI were charged together with N-methyl-2-pyrrolidone at a solid concentration of 30% by weight, reacted for 5 hours at 120°C and then 3 hours at 180°C, and then diluted with N-methyl-2-pyrrolidone so that the solid concentration became 20% by weight whereby synthesizing a polyamideimide solution. The resultant polyamideimide had a logarithmic viscosity of 0.70 dl/g and a glass transition temperature of 153°C. Using the polyamideimide solution obtained as described above, a polyamideimide film of Example C5 was obtained similarly to Example C1 except for using water/isopropanol (2/1 volume ratio) as a coagulation solution. The results of the evaluation of the resultant film are shown in Table C1.

(Example C6)

A polyamideimide film of Example C6 was obtained similarly to Example C 1 except that the solid concentration

of the polyamideimide solution was 28% by weight and the two supports were non-porous PET films. The results of the evaluation of the resultant film are shown in Table C1.

The polyamideimide films of Examples C 1 to C6 were excellent in terms of the thickness accuracy and the uniformity in the structure between the both sides of the film, thus being highly suitable to a practical use. In addition, the respective production methods involved simple devices which gives an economical advantage. On the other hand, the polyamideimide film obtained in Comparative Example C 1 had a poor thickness accuracy and a poor uniformity in the structure between the both sides of the film, thus being poorly suitable to a practical use. In addition, it was poor also from an economical point of view unlike to Example C1 because it needed an extruder and a die for extruding the polyamideimide solution which raised the cost of equipments. Each polyamideimide film of Examples C1 to C5 was porous and can be employed preferably as an impregnation film such as a separation membrane such as a separator in a cell or an electrolyte retaining membrane in a cell. On the other hand, the polyamideimide film of Example C6 was non-porous and can be employed preferably as a substrate film of a magnetic tape, flexible print circuit (FPC), electric insulating material, speaker vibration board and the like.

Table C1

| | Film thickness accuracy Thickness variation (%) | Film surface structure | Uniformity between both sides of film |
|---|---|---|---|
| Example C1 | 5.5 | Porous | Good |
| Example C2 | 5.5 | Porous | Good |
| Example C3 | 5.4 | Porous | Good |
| Example C4 | 5.7 | Porous | Good |
| Example C5 | 5.5 | Porous | Good |
| Example C6 | 5.0 | Non-porous | Good |
| Comparative Example C1 | 10.2 | Porous | Poor |

As described above, an inventive polyamideimide film can provide a film having an excellent thickness accuracy and a uniformity in an economically advaritageous manner. A resultant film is has a high heat resistance, a high quality and an economical advantage, which enable utilization in wide range of applications.

Industrial Applicability

As detailed above, by employing the aspects specified in WHAT IS CLAIMED IS, the present invention can provide a heat-resistant film having a combination of excellent heat resistance, mechanical strength, smoothness, interlaminar peeling resistance and functionalizing agent impregnating capacity, especially a porous film made from a polybenzazole film, as well as a polymeric solid electrolyte membrane having a high mechanical strength and excellent ion conductivity, electricity generating performance and gas barrier performance. It can also provide in an economically advantageous manner a heat-resistant film having a satisfactory thickness accuracy and a uniformity. Moreover, a resultant film can preferably be employed in various uses, especially in electric and electronic fields, since it has a high heat resistance, a high quality and an economical advantage.

## Claims

1. A heat-resistant film comprising at least any one of a polybenzazole, aramid and polyamideimide produced by sandwiching a polymer solution between two supports, introducing a laminate, obtained by converting the polymer solution into a thin film by a roll, slit or press, into a coagulating bath and peeling at least one side of the supports off in the coagulating bath to coagulate the polymer solution in the form of the thin film.

2. A heat-resistant film according to Claim 1 wherein the polymer solution is an isotropic solution.

3. A heat-resistant film according to Claim 1 or 2 wherein the coagulation bath is a poor solvent for the polymer, or a mixture of a poor solvent and a good solvent, or a solution containing salts in a poor solvent.

4. A heat-resistant film according to any of Claims 1 to 3 wherein the support is a film allowing the poor solvent for

the polymer in the coagulation bath or a vapor thereof to permeate and wherein the poor solvent or a vapor thereof which has permeate said film is used for effecting at least a part of the coagulation of the polymer solution.

**5.** A composite ion-exchange membrane comprising a composite layer formed by impregnating a heat-resistant film according to any of Claims 1 to 4 with the ion-exchange resin and a surface layer consisting of an ion-exchange resin having no micropores formed on the both side of the composite layer as sandwiching the composite layer.

FIG.1

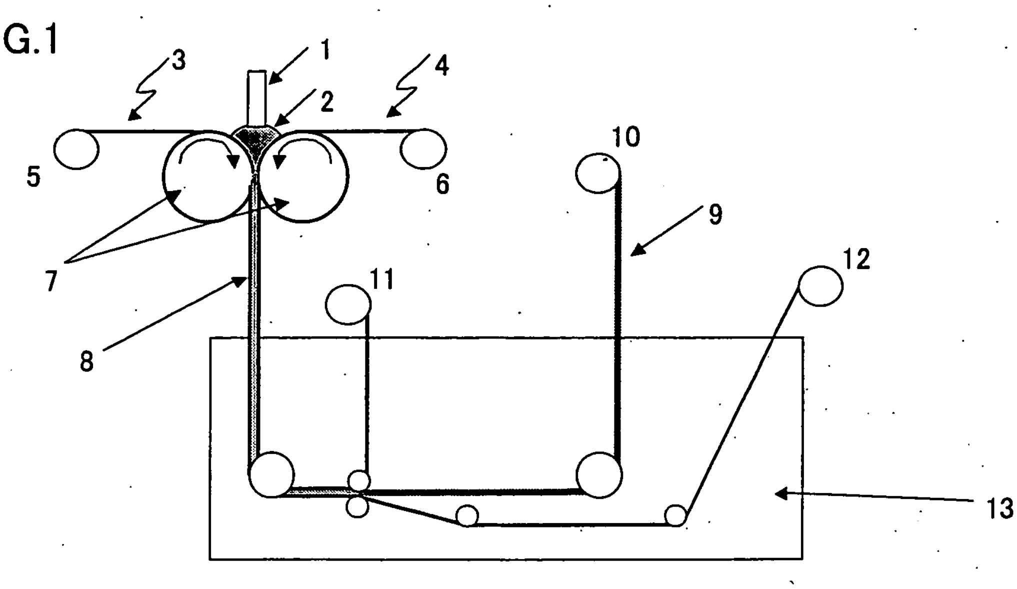


FIG.2

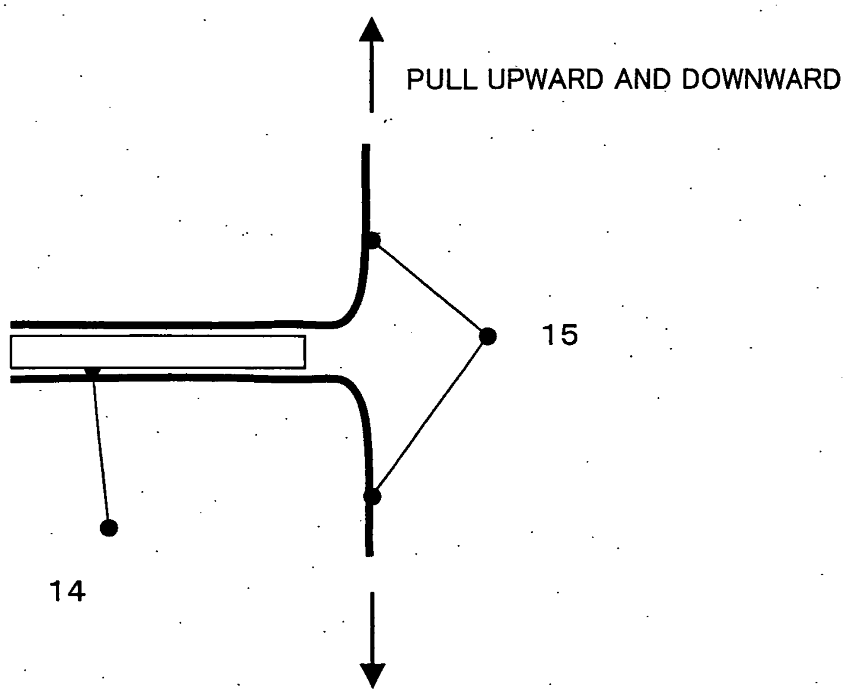


FIG.3

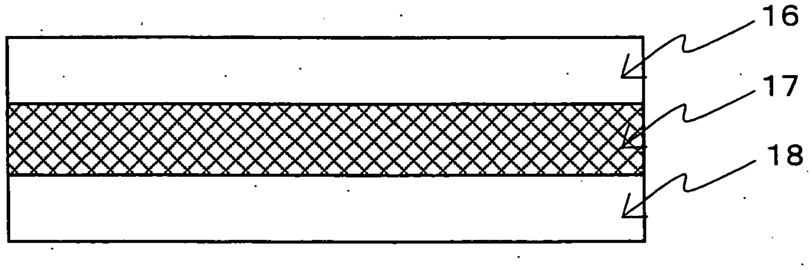

# INTERNATIONAL SEARCH REPORT

International application No.
PCT/JP03/13577

A. CLASSIFICATION OF SUBJECT MATTER
Int.Cl[7] B29C41/24, C08J5/18, C08J9/26, B29C39/18, H01B1/06, H01M8/02

According to International Patent Classification (IPC) or to both national classification and IPC

B. FIELDS SEARCHED

Minimum documentation searched (classification system followed by classification symbols)
Int.Cl[7] B29C41/24, C08J5/18, C08J9/26, B29C39/18, H01B1/06, H01M8/02, B01D67/00-71/64

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 99/10165 A1 (FOSTER-MILLER, INC.), 04 March, 1999 (04.03.99), Full text & EP 1021296 A1 & JP 2001-514431 A | 1-5 |
| A | WO 00/22684 A1 (FOSTER-MILLER, INC.), 20 April, 2000 (20.04.00), Full text & JP 2003-528420 A | 1-5 |
| A | US 3740871 A (FUJI PHOTO FILM CO., LTD.), 20 January, 1989 (20.01.89), Full text & DE 3740871 A & JP 63-141607 A | 1-4 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>05 January, 2004 (05.01.04) | Date of mailing of the international search report<br>20 January, 2004 (20.01.04) |
| Name and mailing address of the ISA/<br>Japanese Patent Office | Authorized officer |
| Facsimile No. | Telephone No. |

Form PCT/ISA/210 (second sheet) (July 1998)

**INTERNATIONAL SEARCH REPORT**

International application No.
PCT/JP03/13577

C (Continuation). DOCUMENTS CONSIDERED TO BE RELEVANT

| Category* | Citation of document, with indication, where appropriate, of the relevant passages | Relevant to claim No. |
|---|---|---|
| A | JP 2002-86476 A (Ube Industries, Ltd.), 26 March, 2002 (26.03.02), Full text (Family: none) | 1-5 |
| A | JP 9-302115 A (Sumitomo Chemical Co., Ltd.), 25 November, 1997 (25.11.97), Full text (Family: none) | 1-5 |
| A | JP 2002-146015 A (Toyobo Co., Ltd.), 22 May, 2002 (22.05.02), Full text (Family: none) | 1 |
| A | EP 718903 A1 (JAPAN GORE-TEX, INC.), 26 June, 1996 (26.06.96), Full text & DE 69527033 D & JP 8-162132 A & US 6054230 A1 | 5 |
| A | JP 2001-294704 A (Ube Industries, Ltd.), 23 October, 2001 (23.10.01), Claims (Family: none) | 5 |
| A | JP 2002-166218 A (Teijin Ltd.), 11 June, 2002 (11.06.02), Full text (Family: none) | 1-5 |
| A | JP 8-155988 A (Fujimori Kogyo Co., Ltd.), 18 June, 1996 (18.06.96), Claims; Fig. 1 (Family: none) | 1 |
| P,A | JP 2003-165128 A (Ube Industries, Ltd.), 10 June, 2003 (10.06.03), Full text (Family: none) | 1-4 |
| A | JP 9-132667 A (FUJI PHOTO FILM CO., LTD.), 20 May, 1997 (20.05.97), Full text (Family: none) | 1-4 |
| A | JP 63-66233 A (Asahi Chemical Industry Co., Ltd.), 24 March, 1988 (24.03.88), Full text (Family: none) | 1-4 |

Form PCT/ISA/210 (continuation of second sheet) (July 1998)